(19) Europäisches Patentamt
European Patent Office
Office européen des brevets

(11) EP 4 549 522 A1

(12) EUROPEAN PATENT APPLICATION

(43) Date of publication:
**07.05.2025 Bulletin 2025/19**

(21) Application number: **24209488.6**

(22) Date of filing: **29.10.2024**

(51) International Patent Classification (IPC):
***C09D 11/102*** *(2014.01)* ***C09D 11/107*** *(2014.01)*
***C09D 11/108*** *(2014.01)* ***C09D 11/322*** *(2014.01)*
***C09D 11/38*** *(2014.01)*

(52) Cooperative Patent Classification (CPC):
**C09D 11/38; C09D 11/102; C09D 11/107; C09D 11/108; C09D 11/322**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 JP 2023188675**

(71) Applicants:
- **Artience Co., Ltd.**
  **Chuo-ku**
  **Tokyo 104-8377 (JP)**
- **TOYOCOLOR CO., LTD.**
  **Tokyo 104-8381 (JP)**

(72) Inventors:
- **NOMURA, Takanori**
  **Tokyo, 104-8381 (JP)**
- **SUNAOSHI, Kazushi**
  **Tokyo, 104-8381 (JP)**
- **SUZUKI, Norio**
  **Tokyo, 104-8381 (JP)**

(74) Representative: **SSM Sandmair Patentanwälte Rechtsanwalt Partnerschaft mbB**
**Joseph-Wild-Straße 20**
**81829 München (DE)**

(54) **AQUEOUS INKJET INK FOR SHRINK FILM AND PRINTED ITEM**

(57) Provided is an aqueous inkjet ink which has favorable followability relative to deformation such as the shrinking of shrink films, can produce printed items with no bleeding, and also has favorable jetting stability. The aqueous inkjet ink for shrink film contains an organic solvent, a surfactant, and a resin, wherein the organic solvent includes an organic solvent (A-1) having an SP value within a range from 11 to 13.5 $(cal/cm^3)^{1/2}$ and having at least one hydroxyl group in an amount within a range from 5 to 30% by mass of the total mass of the aqueous inkjet ink, the surfactant includes a surfactant (B-1) composed of at least one surfactant selected from the group consisting of acetylenediol-based surfactants and polyoxyalkylene alkyl ether-based surfactants, and the weighted average value of the SP values of the resin and the surfactant is within a range from 9 to 11.5 $(cal/cm^3)^{1/2}$.

EP 4 549 522 A1

## Description

TECHNICAL FIELD

The present invention relates to an aqueous inkjet ink used for printing to a shrink film, and a printed item obtained by printing onto the shrink film using the aqueous inkjet ink.

BACKGROUND ART

Unlike plate-based printing methods, digital printing methods do not require a printing plate. Consequently, employing a digital printing method enables reduction in the size of the printing device as well as cost reductions and the like. The inkjet printing method, which represents one type of digital printing method, offers additional advantages to the characteristics described above, including reduced noise from the printing device and ease of color printing, and is therefore being increasing used, not only in office and household applications, but also in industrial applications.

Until now, when an inkjet printing method was used in an industrial application, a solvent-based ink or ultraviolet-curable ink has typically been employed. However, in recent years, from the viewpoints of the health and safety of operators, together with environmental considerations, the demand for aqueous inks is growing.

In this description, an aqueous ink used in an inkjet printing method is referred to as simply an "aqueous inkjet ink".

However, the various printing substrates used in the above industrial applications include shrink films. A shrink film is a resin film that shrinks (contracts) upon heating. In terms of being able to be adhered tightly to any shrink target object regardless of the object shape, not impairing the shape design of the shrink target object, and being easily removable from the shrink target container, thereby improving the recyclability of the container, shrink films are mainly used in packaging applications. Further, when a printed item of a shrink film (a shrink film printed item) is used in a packaging application, the shrink film is first printed, and the shrink film printed item is then shrunk and adhered to the shrink target object (the object being packaged).

In this description, the term "printed item" indicates a laminate composed of a shrink film, a layer of an aqueous inkjet ink (the ink layer), and, when used, a layer (ink aggregation layer) formed from a pretreatment liquid (described below in further detail). Further, the ink layer included in the printed item may be, for example, an ink layer formed from a plurality of layers formed by printing a plurality of different types of aqueous inkjet ink (described below as an "aqueous inkjet ink set").

As outlined above, when a shrink film is used, printing is performed before the shrink film is shrunk. In other words, the ink layer on the shrink film also contracts during the shrink process. Accordingly, if the ink layer is unable to follow and conform to the shrink process, then there is a possibility of problems arising, such as the occurrence of wrinkling, cracking or splitting, or a non-uniform shrink rate.

Furthermore, shrink films are one type of resin film substrate. When an aqueous inkjet ink is printed to this type of printing substrate, another problem which can often occur is that drying does not occur by permeation of the liquid components into the interior of the printing substrate, meaning liquid droplets of the aqueous inkjet ink may coalesce and cause bleeding.

Accordingly, when using an aqueous inkjet ink to conduct printing onto a shrink film, the ink not only requires good followability relative to the deformation during the shrink process, but must also be capable of producing a printed item of superior print quality with no bleeding.

However, up until now, very little investigation has been conducted related to the printing of aqueous inkjet inks onto shrink films.

For example, Patent Document 1 relates to an aqueous composition for inkjet recording which contains a blocked isocyanate, a carbodiimide compound and/or an oxazoline compound. Further, the document also states that the aqueous composition can be used in combination with a water-based ink for inkjet recording containing a pigment (corresponding with the "aqueous inkjet ink" in the present description) (for example, paragraph numbers 0010 and 0014). Moreover, in the examples of Patent Document 1, the water-based ink actually produced also contains, in addition to a pigment and water, a resin (polymer particles); organic solvents including propylene glycol (1,2-propanediol), diethylene glycol mono(normal) butyl ether and N-methyldiethanolamine; and an alkylene glycol-modified polydimethylsiloxane as a surfactant (see paragraph numbers 0084 to 0094, and Table 4). A combination of this water-based ink and the above aqueous composition is used to conduct printing to a shrink PET film (paragraph numbers 0099 to 0101).

On the other hand, in Patent Document 1, there is no specific description of the surfactants that may be included in the water-based ink. In Patent Document 1, a "surfactant" is merely listed as one optional component (paragraph number 0063). Further, as mentioned above, it is assumed that the water-based ink described in Patent Document 1 will be used in combination with the above aqueous composition. Accordingly, if only the water-based ink were to be printed onto a shrink film, then Patent Document 1 includes no comment as to whether the type of printed item mentioned above with excellent

deformation followability and good suppression of bleeding can be obtained. When the inventors of the present invention actually produced an aqueous inkjet ink that simulated the composition, including the organic solvent and surfactant, used in a specific example of the above water-based ink, and then conducted a series of evaluations, the results revealed that the deformation followability in particular was unsatisfactory (for details, see the examples below).

Further, Patent Document 2 relates to a shrink film for inkjet recording produced by melting a resin having a solubility parameter (SP value) within a range from 8 to 13 $(cal/cm^3)^{1/2}$, extruding the molten resin onto a cooling drum to produce an unstretched sheet, and then subjecting the unstretched sheet to an axial stretching treatment. Furthermore, in the examples of Patent Document 2, a black ink B (corresponding with an "aqueous inkjet ink" in the present description) is produced which contains a carbon black, water, an acrylic resin, and organic solvents such as glycerol, ethylene glycol, N-methylpyrrolidone and isopropyl alcohol, and this black ink is then used in printing to a variety of shrink films (see paragraph numbers 0058 to 0070, 0072 to 0074, and Table 2).

On the other hand, as is evident from Table 2 and paragraph number 0072, in Patent Document 2, the black ink B is used as a comparative example. In actuality, in Table 2, there is not a single example that reaches a practically applicable level for the "image heat resistance" evaluation (which, based on the description in paragraph numbers 0069 and 0070, can be said to be a similar item to the deformation followability described in the present description). Furthermore, in Patent Document 2, there is no specific mention of composition of the aqueous inkjet ink. In other words, the Patent Document 2 includes neither mention nor suggestion of what type of composition of aqueous inkjet ink is able to ensure good followability relative to deformation and enable printed items with no bleeding to be obtained.

## PRIOR ART DOCUMENTS

### PATENT DOCUMENTS

Patent Document 1: JP 2019-189867 A
Patent Document 2: JP 2003-246136 A

## SUMMARY OF THE INVENTION

### PROBLEMS TO BE SOLVED BY THE INVENTION

As outlined above, there has still not been adequate investigation conducted in relation to aqueous inkjet inks that have favorable deformation followability, are capable of producing printed items with no bleeding, and also exhibit excellent jetting stability, which is another essential condition for use in inkjet printing methods.

Accordingly, one embodiment of the present invention has an object of providing an aqueous inkjet ink which has favorable followability relative to deformation such as the shrinking of shrink films, can produce printed items with no bleeding, and also has favorable jetting stability. Further, another embodiment of the present invention has an object of providing an aqueous inkjet ink which, in addition to the above characteristics, is also capable of producing printed items having excellent recyclability.

### MEANS TO SOLVE THE PROBLEMS

As a result of intensive investigation, the inventors of the present invention discovered that by using an aqueous inkjet ink having the composition described below, all of the objects described above could be achieved simultaneously and at a high level.

In other words, embodiments of the present invention relate to the aqueous inkjet ink described in [1] to [3] below, and the printed item described below in [4] obtained using the aqueous inkjet ink.

[1] An aqueous inkjet ink for shrink film, the inkjet ink including an organic solvent, a surfactant, and a resin, wherein

the organic solvent includes an organic solvent (A-1) having an SP value within a range from 11 to 13.5 $(cal/cm^3)^{1/2}$ and having at least one hydroxyl group in an amount within a range from 5 to 30% by mass of the total mass of the aqueous inkjet ink,
the surfactant includes a surfactant (B-1) composed of at least one surfactant selected from the group consisting of acetylenediol-based surfactants and polyoxyalkylene alkyl ether-based surfactants, and
the weighted average value of the SP values of the resin and the surfactant is within a range from 9 to 11.5 $(cal/cm^3)^{1/2}$.

[2] The aqueous inkjet ink for shrink film according to [1], wherein the surfactant (B-1) composed of at least one surfactant selected from the group consisting of acetylenediol-based surfactants and polyoxyalkylene alkyl ether-based surfactants includes a surfactant (B-1-1) having an HLB value within a range from 3 to 12.

[3] The aqueous inkjet ink for shrink film according to [1] or [2], wherein the organic solvent has a boiling point (weighted average value) at one atmosphere within a range from 150 to 190°C.

[4] A printed item obtained by printing the aqueous inkjet ink according to [1] or [2] onto a shrink film using an inkjet printing method.

EFFECTS OF THE INVENTION

The aqueous inkjet ink that represents one embodiment of the present invention has effects including favorable followability relative to deformation such as the shrinking of shrink films, an ability to produce printed items with no bleeding, and favorable jetting stability. Further, the aqueous inkjet ink that represents another embodiment of the present invention has effects which include, in addition to the above characteristics, an ability to produce printed items having excellent recyclability.

EMBODIMENTS FOR CARRYING OUT THE INVENTION

An aqueous inkjet ink that represents one embodiment of the present invention (hereinafter also referred to as simply "the aqueous inkjet ink of an embodiment of the present invention" is described below. The present invention is not limited to the following embodiments, and also includes other variations, provided they do not alter the essential aspects of the present invention.

As mentioned above, the aqueous inkjet ink of an embodiment of the present invention is for shrink film applications. As described above, in a shrink film printed item, the shrink film that functions as the printing substrate is shrunk following printing. Accordingly, the ink layer requires the ability to follow the shrink deformation without any wrinkling, cracking or splitting. In order to achieve this followability, an ink layer having uniform thickness must be able to be formed on the shrink film that represents the printing substrate, the aqueous inkjet ink must exhibit satisfactory wet spreadability on the shrink film, and the ink layer must have good compatibility with and adhesion to the shrink film.

Accordingly, as a result of intensive investigation, the inventors of the present invention discovered that by using the aqueous inkjet ink of an embodiment having the composition described above, the objects described above were able to be achieved, and the aqueous inkjet ink also exhibited excellent suppression of printed item bleeding and excellent jetting stability. The mechanism of the present invention is described below, but this is merely the supposition of the inventors of the present invention, and the present invention should not be interpreted as being limited by the mechanism described below.

First, the aqueous inkjet ink of an embodiment of the present invention contains an organic solvent (A-1) having an SP value within a range from 11 to 13.5 $(cal/cm^3)^{1/2}$ and having at least one hydroxyl group in an amount within a range from 5 to 30% by mass of the total mass of the aqueous inkjet ink. The organic solvents included in aqueous inkjet inks are generally used for the purposes of adjusting the drying properties (wettability) and surface tension and the like. On the other hand, the resins that constitute shrink films exhibit poor compatibility with water, which represents the main component of the aqueous inkjet ink of an embodiment of the present invention, and unlike paper substrates, allow absolutely no permeation of the aqueous inkjet ink. Accordingly, in the aqueous inkjet ink of an embodiment of the present invention, by ensuring that the SP value of the organic solvent (A-1) falls within a range from 11 to 13.5 $(cal/cm^3)^{1/2}$, the compatibility between the aqueous inkjet ink and the resin that constitutes the shrink film can be improved, and the surface tension of the aqueous inkjet ink can be adjusted to a more suitable value. Further, by using a compound having a hydroxyl group as the organic solvent (A-1), good compatibility with water can be ensured. Moreover, by using a prescribed amount of the organic solvent (A-1), the effects described above can be realized more reliably. In this manner, using the organic solvent (A-1) ensures a more unfirm thickness for the ink layer, good wet spreadability of the aqueous inkjet ink on the shrink film, and good compatibility with the shrink film.

Furthermore, the inclusion of the organic solvent (A-1) ensures good aqueous inkjet ink wettability and improves the jetting stability.

Furthermore, the aqueous inkjet ink of an embodiment of the present invention contains a surfactant (B-1) composed of at least one surfactant selected from the group consisting of acetylenediol-based surfactants and polyoxyalkylene alkyl ether-based surfactants. As described below, besides these surfactants, siloxane-based surfactants and fluorine-based surfactants and the like are also known as surfactants typically used in aqueous inkjet inks. On the other hand, the silicon (Si) atoms that exist in the above siloxane-based surfactants and the fluorine (F) atoms that exist in the above fluorine-based surfactants sometimes exhibit hydrophobicity, and if used in excess, can sometimes have adverse effects on the uniformity of the thickness of the obtained ink layer, and the compatibility with and adhesion to the shrink film. In contrast, it is thought that because the acetylenediol-based surfactants and polyoxyalkylene alkyl ether-based

surfactants used in the aqueous inkjet ink of an embodiment of the present invention have molecular structures composed mostly of carbon atoms, oxygen atoms and hydrogen atoms, the compatibility with the resin that constitutes the shrink film is high. Further, both these types of surfactants have hydroxyl groups, meaning they can form OH-$\pi$ interactions and hydrogen bonding with the resin that constitutes the shrink film, which is thought to contribute to an improvement in the adhesion of the ink layer. Moreover, acetylenediol-based surfactants and polyoxyalkylene alkyl ether-based surfactants not only exhibit excellent compatibility with the above organic solvent (A-1), enabling uniform dispersion through the aqueous inkjet ink, but also exhibit superior orientation at the interface, meaning they are essential materials for ensuring uniform wet spreadability of the aqueous inkjet ink. Following formation of the ink layer, it is thought that a large amount of the oriented surfactant is retained at the surface, making it easier to achieve the above improvements in compatibility and adhesion. In this manner, it is thought that the surfactant (B-1) contributes to all of the properties required for the abovementioned followability of the aqueous inkjet ink to deformation of the shrink film.

The OH-$\pi$ interactions and hydrogen bonding interactions and the like mentioned above can, of course, also occur between molecules of the surfactant (B-1). Further, as mentioned above, it is thought that because the surfactant (B-1) exhibits excellent orientation at the interface, the surfactant (B-1) orients rapidly at the interface following application of the aqueous inkjet ink to the printing substrate. As a result, it is thought that coalescing of adjacent inkjet ink droplets is suppressed, meaning bleeding in the printed item can be suppressed.

On the other hand, it is thought that even aqueous inkjet ink inside the inkjet head can undergo the above mentioned interactions and orientation at the interface (nozzle exit), and it is thought that there is a possibility this may cause a deterioration in the jetting stability. However, inside the inkjet head, the aqueous inkjet ink is under flow conditions due to the jetting and outflow from the ink tank (container), and therefore unlike the case in which the aqueous inkjet ink is located on a printing substrate, the aqueous inkjet ink is usually in a state of continuous flow. As a result, it is thought that the interaction and compatibility with the water and the organic solvent (A-1) occur preferentially to the abovementioned interactions and orientation at the interface. Further, it is thought that as a result of these dominant interactions, the viscoelasticity of the entire aqueous inkjet ink improves, yielding an improvement in the jetting stability.

Moreover, in the aqueous inkjet ink of an embodiment of the present invention, the weighted average value of the SP values of the included resin and surfactant is within a range from 9 to 11.5 $(cal/cm^3)^{1/2}$. The resin and the surfactant are both components that exist within the ink layer. Accordingly, by ensuring that the SP values of these components satisfy the above range, favorable compatibility with the resin that constitutes the shrink film can be ensured, in a similar manner to that described above for the organic solvent (A-1).

From the viewpoint of ensuring good compatibility between the resin that constitutes the shrink film and the ink layer, regardless of the type of resin, thereby obtaining printed items with excellent deformation followability, the weighted average value of the SP values of the abovementioned resin and surfactant is preferably within a range from 9.3 to 11.2 $(cal/cm^3)^{1/2}$, and particularly preferably within a range from 9.6 to 11.0 $(cal/cm^3)^{1/2}$.

As described above, in order to achieve the objects of the present invention described above, ensuring the composition of the aqueous inkjet ink of an embodiment of the present invention satisfies the above conditions is essential.

Each of the components that constitutes the aqueous inkjet ink of one embodiment of the present invention is described below in further detail.

<Organic Solvent>

The aqueous inkjet ink of an embodiment of the present invention contains an organic solvent. Further, as described above, the organic solvent includes an organic solvent (A-1) having an SP value within a range from 11 to 13.5 $(cal/cm^3)^{1/2}$ and having at least one hydroxyl group in an amount within a range from 5 to 30% by mass of the total mass of the aqueous inkjet ink.

The organic solvent may include an organic compound having low solubility in water, but from the viewpoints of ensuring the compatibility with water described above, improving the wet spreadability of the aqueous inkjet ink, and making it easier to achieve better uniformity of the thickness of the obtained ink layer, resulting in improved deformation followability of the ink layer, the use of a water-soluble organic solvent is preferred.

In this description, the term "organic solvent" refers to an organic compound that is liquid at 25°C, and a "water-soluble organic solvent" refers to those organic solvents having a solubility in water at 25°C of at least 1% by mass.

Further, in this description, the term "SP value" is an abbreviation of "Solubility Parameter". Known methods for determining the SP value include a method in which the SP value is calculated from physical property values of the compound, a method in which the SP value is calculated from the molecular structure, and a method in which the SP value is measured by testing. In this description, SP values represent values calculated by Fedors' estimation method represented by formula 1 shown below. Further, the units for the SP value are $(cal/cm^3)^{1/2}$.

$$\text{Formula 1: } (\text{SP value}) = (\sum Ecoh/\sum V)^{1/2}$$

In formula 1, Ecoh represents the cohesive energy prescribed for each functional group, and V represents the molar molecular volume prescribed for each functional group. These Ecoh and V values are described in R.F. Fedors, "Polymer Engineering & Science" (Vol. 14, No. 2, 1974, pp. 147 to 154).

<<Organic solvent (A-1) having an SP value of 11 to 13.5 $(cal/cm^3)^{1/2}$ and having at least one hydroxyl group>>

Examples of the above organic solvent (A-1) include alkanediols such as 1,2-propanediol (13.5, 188°C), 1,2-butanediol (12.8, 193°C), 1,3-butanediol (12.8, 208°C), 1,4-butanediol (12.9, 230°C), 2,3-butanediol (12.5, 182°C), 1,2-pentanediol (12.2, 210°C), 1,5-pentanediol (12.4, 239°C), 2,4-pentanediol (12.0, 198°C), 1,2-hexanediol (11.8, 223°C), 2,5-hexanediol (11.6, 218°C), 2-methyl-1,3-propanediol (12.8, 213°C), 3-methyl-1,3-butanediol (12.1, 203°C), 3-methyl-1,5-pentanediol (11.8, 250°C), 2-methyl-1,3-pentanediol (11.6, 218°C), and 2-methyl-2,4-pentanediol (11.5, 198°C);

polyalkylene glycols such as diethylene glycol (13.0, 244°C), triethylene glycol (12.1, 287°C), tetraethylene glycol (11.6, 314°C), and dipropylene glycol (11.7, 231°C);
(poly)alkylene glycol monoalkyl ethers such as ethylene glycol monomethyl ether (12.0, 125°C), ethylene glycol monoethyl ether (11.5, 136°C), diethylene glycol monomethyl ether (11.2, 193°C), and propylene glycol monomethyl ether (11.3, 121°C);
monoalkyl alcohols such as ethanol (12.6, 78°C), normal propanol (11.8, 97°C), isopropanol (11.6, 83°C), normal butanol (11.3, 117°C), and 2-butanol (11.1, 100°C); and
alkanolamines such as dimethylethanolamine (11.3, 135°C), N-methylethanolamine (12.5, 156°C), N-methyldiethanolamine (12.3, 247°C), 1-amino-2-propanol (12.6, 159°C), 3-amino-1-propanol (13.3, 188°C), and 2-aminoisobutanol (12.2, 166°C). One of these compounds may be used alone, or a combination of two or more compounds may be used.

The numerical values in the above parentheses represent the SP value (units: $(cal/cm^3)^{1/2}$) and the boiling point at one atmosphere for each compound. Further, in this description, the term "(poly)alkylene glycol" means at least one compound selected from the group consisting of alkylene glycols and polyalkylene glycols.

In the aqueous inkjet ink of an embodiment of the present invention, compounds having two or more hydroxyl groups can be used favorably as the organic solvent (A-1). This is because a larger number of hydroxyl groups increases the compatibility with the water that represents the main component of the aqueous inkjet ink, thereby improving the wet spreadability of the aqueous inkjet ink, making it easier to achieve better uniformity of the thickness of the obtained ink layer, and improving the deformation followability of the ink layer.

Further, from the viewpoints of enhancing the compatibility with the resin that constitutes the shrink film, and improving the wet spreadability and compatibility of the aqueous inkjet ink relative to the shrink film, thereby improving the deformation followability of the obtained ink layer, the difference between the SP value of the organic solvent (A-1) and the SP value of the resin that constitutes the shrink film used in producing the printed item is preferably not more than 1.3 $(cal/cm^3)^{1/2}$, and particularly preferably 1.0 $(cal/cm^3)^{1/2}$ or less. In those cases where the shrink film is composed of different types of resin laminated together, the SP value of the resin that constitutes the surface which contacts the aqueous inkjet ink is used as the resin SP value. For example, in the case where the resin that constitutes the shrink film is polyethylene terephthalate (SP value: 13.2 $(cal/cm^3)^{1/2}$), a compound having an SP value within a range from 11.9 to 13.5 $(cal/cm^3)^{1/2}$ is preferably used as the organic solvent (A-1), and a compound having an SP value within a range from 12.2 to 13.5 $(cal/cm^3)^{1/2}$ is particularly preferred. Further, in the case where the resin that constitutes the shrink film is a polystyrene resin (SP value: 10.6 $(cal/cm^3)^{1/2}$), a compound having an SP value within a range from 11 to 11.9 $(cal/cm^3)^{1/2}$ is more preferably used as the organic solvent (A-1), and a compound having an SP value within a range from 11 to 11.6 $(cal/cm^3)^{1/2}$ is particularly preferred.

In those cases where the aqueous inkjet ink contains two or more types of the organic solvent (A-1), at least one of those organic solvents (A-1) preferably satisfies the above condition relating to the difference from the SP value of the resin that constitutes the shrink film, and it is particularly preferable that all of the organic solvents (A-1) included in the aqueous inkjet ink satisfy the above SP value difference condition.

Particularly from the viewpoint of improving the deformation followability of the printed item regardless of the type of resin that constitutes the shrink film, in the aqueous inkjet ink of an embodiment of the present invention, a combination of a compound having an SP value within a range from 12.0 to 13.5 $(cal/cm^3)^{1/2}$ and a compound having an SP value within a range from 11 to 11.9 $(cal/cm^3)^{1/2}$ is extremely desirable as the organic solvent (A-1).

If consideration is given to achieving both good suppression of bleeding in the obtained printed item and improved jetting stability, the boiling point of the organic solvent (A-1) at one atmosphere is preferably within a range from 120 to 210°C, and particularly preferably from 120 to 200°C.

The amount of the organic solvent (A-1) included in the aqueous inkjet ink of an embodiment of the present

invention is within a range from 5 to 30% by mass, preferably from 8 to 27% by mass, and particularly preferably from 10 to 25% by mass of the total mass of the aqueous inkjet ink. By ensuring that the amount of the organic solvent (A-1) falls within the above range, the compatibility between the aqueous inkjet ink containing the organic solvent (A-1) and the resin that constitutes the shrink film is more favorable, and the deformation followability of the printed item improves. Further, an amount selected from within the above range is also desirable in terms of improving the jetting stability of the aqueous inkjet ink.

<<Other Organic Solvent>>

The aqueous inkjet ink of an embodiment of the present invention may also contain an organic solvent other than the organic solvent (A-1) (referred to as the "other organic solvent" in this description). However, the amount of this other solvent preferably does not impair the actions of the organic solvent (A-1). Specifically, the amount of the other organic solvent is preferably not more than 50% by mass (and may be 0% by mass), more preferably not more than 30% by mass (and may be 0% by mass), and particularly preferably 20% by mass or less (and may be 0% by mass) of the total mass of all the organic solvent contained in the aqueous inkjet ink of the embodiment.

Examples of compounds that may be used as the other organic solvent described above include alkanediols such as 1,2-ethanediol (ethylene glycol) and 1,3-propanediol;

polyalkylene glycols such as tripropylene glycol;
alkanetriols such as glycerol, 1,2,4-butanetriol, and 1,2,6-hexanetriol;
(poly)alkylene glycol monoalkyl ethers such as ethylene glycol monobutyl ether, diethylene glycol monoethyl ether, diethylene glycol mono-normal-propyl ether, diethylene glycol monoisopropyl ether, diethylene glycol mono-normal-butyl ether, diethylene glycol monoisobutyl ether, triethylene glycol monomethyl ether, triethylene glycol monoethyl ether, triethylene glycol mono-normal-propyl ether, triethylene glycol mono-normal-butyl ether, triethylene glycol monoisobutyl ether, tetraethylene glycol monomethyl ether, tetraethylene glycol monoethyl ether, propylene glycol monoethyl ether, propylene glycol mono-normal-propyl ether, propylene glycol mono-normal-butyl ether, dipropylene glycol monomethyl ether, dipropylene glycol monoethyl ether, dipropylene glycol mono-normal-propyl ether, dipropylene glycol mono-normal-butyl ether, tripropylene glycol monomethyl ether, tripropylene glycol monoethyl ether, tripropylene glycol mono-normal-propyl ether, tripropylene glycol mono-normal-butyl ether, and butylene glycol monomethyl ether (3-methoxy-1-butanol);
(poly)alkylene glycol dialkyl ethers such as ethylene glycol diethyl ether, diethylene glycol dimethyl ether, diethylene glycol ethyl methyl ether, diethylene glycol diethyl ether, diethylene glycol isopropyl methyl ether, diethylene glycol butyl methyl ether, triethylene glycol dimethyl ether, triethylene glycol butyl methyl ether, and tetraethylene glycol dimethyl ether;
monoalkyl alcohols such as tert-butanol;
alkanolamines such as triethanolamine; and
lactams such as 2-pyrrolidone, N-methyl-2-pyrrolidone, N-ethyl-2-pyrrolidone, 1-(2-hydroxymethyl)-2-pyrrolidone, 1-(2-hydroxyethyl)-2-pyrrolidone, N-vinyl-2-pyrrolidone, 2-piperidone (δ-valerolactam), N-methyl-2-piperidone, N-vinyl-2-piperidone, ε-caprolactam, and N-vinyl-ε-caprolactam. One of these compounds may be used alone, or a combination of two or more compounds may be used.

In one embodiment, in the case where the aqueous inkjet ink of an embodiment of the present invention contains another solvent, the use of an organic solvent (A-2) having an SP value of at least 10 $(cal/cm^3)^{1/2}$ but less than 11 $(cal/cm^3)^{1/2}$ and having at least one hydroxyl group is desirable. By using a prescribed amount of this organic solvent (A-2) in the presence of the organic solvent (A-1), the compatibility between the aqueous inkjet ink and the resin that constitutes the shrink film can be significantly improved, and favorable deformation followability can be achieved for the printed item regardless of the type of resin constituting the shrink film.

Among the other solvents exemplified above, examples of compounds that belong to the category of organic solvents (A-2) and can be used favorably as the organic solvent (A-2) include (poly)alkylene glycol monoalkyl ethers such as ethylene glycol monobutyl ether (10.8, 171°C), diethylene glycol monoethyl ether (10.9, 196°C), diethylene glycol mono-normal-propyl ether (10.7, 214°C), diethylene glycol monoisopropyl ether (10.7, 214°C), diethylene glycol mono-normal-butyl ether (10.5, 231°C), diethylene glycol monoisobutyl ether (10.4, 217°C), propylene glycol monoethyl ether (10.9, 133°C), propylene glycol mono-normal-propyl ether (10.7, 150°C), propylene glycol mono-normal-butyl ether (10.4, 170°C), dipropylene glycol monomethyl ether (10.4, 188°C), dipropylene glycol monoethyl ether (10.3, 198°C), dipropylene glycol mono-normal-propyl ether (10.1, 212°C), and butylene glycol monomethyl ether (10.9, 158°C); and monoalkyl alcohols such as tert-butanol (10.9, 83°C). One of these compounds may be used alone, or a combination of two or more compounds may be used.

The numerical values in the above parentheses represent the SP value (units: $(cal/cm^3)^{1/2}$) and the boiling point

at one atmosphere for each compound.

In particular, if consideration is given to achieving both good suppression of bleeding in the obtained printed item and improved jetting stability, the boiling point of the organic solvent (A-2) at one atmosphere is preferably within a range from 135 to 235°C, and particularly preferably from 170 to 215°C.

Further, from the viewpoints of achieving favorable manifestation of the effects of the organic solvent (A-2), obtaining a printed item with excellent deformation followability, and achieving an aqueous inkjet ink of superior jetting stability, the amount of the organic solvent (A-2) is preferably at least 50% by mass (and may be 100% by mass), more preferably at least 75% by mass (and may be 100% by mass), and particularly preferably 90% by mass or more (and may be 100% by mass) of the total mass of other solvents incorporated in the aqueous inkjet ink of an embodiment of the present invention.

The organic solvent included in the aqueous inkjet ink of an embodiment of the present invention has a boiling point (weighted average value) at one atmosphere that is preferably within a range from 150 to 190°C, and more preferably from 155 to 180°C. By ensuring that the boiling point (weighted average value) of the organic solvent falls within the above range, printed items with no bleeding can be obtained, and the jetting stability improves. Further, because problems such as the aqueous inkjet ink drying completely before satisfactory formation of the ink layer, or a portion of the organic solvent remaining following formation of the ink layer can be avoided, printed items of excellent deformation followability can be produced regardless of the type of resin constituting the shrink film.

In this description, the expression "boiling point (weighted average value) of the organic solvent" simply refers to the boiling point of the organic solvent in those cases where the aqueous inkjet ink contains only one type of solvent, or refers to the weighted average value of the boiling points of two or more types of organic solvent in those cases where the aqueous inkjet ink contains two or more organic solvents. Further, the weighted average value of the boiling point at one atmosphere is a value obtained by adding together the products, calculated for each of the organic solvents, of the boiling point at one atmosphere and the mass proportion of the organic solvent relative to the total mass of organic solvent.

The total amount of organic solvent contained in the aqueous inkjet ink of an embodiment of the present invention is preferably within a range from 5 to 45% by mass, more preferably from 8 to 36% by mass, and particularly preferably 10 to 30% by mass of the total mass of the aqueous inkjet ink. By ensuring that the total amount of organic solvent falls within this range, printed items with excellent deformation followability and good suppression of bleeding can be obtained, and the jetting stability of the aqueous inkjet ink can also be improved.

< Surfactant>

The aqueous inkjet ink of an embodiment of the present invention contains a surfactant. Further, as described above, the surfactant includes a surfactant (B-1) composed of at least one surfactant selected from the group consisting of acetylenediol-based surfactants and polyoxyalkylene alkyl ether-based surfactants.

In one embodiment, the surfactant (B-1) preferably includes a surfactant (B-1-1) having an HLB value within a range from 3 to 12. Surfactants (B-1-1) with an HLB value within a range from 3 to 12 exhibit excellent compatibility with the organic solvent (A-1), and also exhibit favorable orientation at the interface, which contributes to more uniform wet spreadability of the aqueous inkjet ink and improved compatibility with the resin that constitutes the shrink film. As a result, the deformation followability of printed items produced using the aqueous inkjet ink improves, and bleeding within the printed items can be suppressed.

Further, from the viewpoints of achieving favorable manifestation of the above effects, and obtaining printed items with excellent deformation followability and bleeding suppression, when an acetylenediol-based surfactant, which is a compound having two hydroxyl groups, is used as the surfactant (B-1-1) having an HLB value of 3 to 12, that HLB value is more preferably within a range from 3 to 10, and particularly preferably from 4 to 9. Furthermore, from the same viewpoints, when a polyoxyalkylene alkyl ether-based surfactant, which is a compound having one hydroxyl group, is used as the surfactant (B-1-1) having an HLB value of 3 to 12, that HLB value is more preferably within a range from 6 to 12, and particularly preferably from 9 to 12.

In this description, the "HLB (Hydrophilic-Lipophilic Balance) value" is one parameter representing the degrees of hydrophilicity and hydrophobicity of a material. The smaller this HLB value, the higher the hydrophobicity of the material, and the greater the HLB value, the higher the hydrophilicity. Known methods for determining the HLB value include methods of measuring the value by testing, and methods of calculating the value from the molecular structure, wherein examples of these methods of calculating the HLB value from the molecular structure include Griffin's method, Davies' method, and the Kawakami method. In this description, the HLB values used were calculated using Griffin's method as represented by formula 2 shown below.

$$\text{(HLB value)} = 20 \times \text{(total of molecular weights of hydrophilic portions)} \div \text{(molecular weight of material)} \qquad \text{Formula 2:}$$

In one embodiment, the aqueous inkjet ink of an embodiment of the present invention preferably contains a surfactant (B-1-1) having an HLB value within a range from 3 to 12 and a surfactant (B-1-2) having an HLB value exceeding 12 but not more than 20 as the surfactant (B-1). As mentioned above, the surfactant (B-1-1) having an HLB value of 3 to 12 exhibit excellent compatibility with the organic solvent (A-1), and also exhibit favorable orientation at the interface. In contrast, the surfactant (B-1-2) having an HLB value exceeding 12 but not more than 20 exhibits particularly superior compatibility with the water that represents the main component of the aqueous inkjet ink. Accordingly, orientation of the surfactant (B-1-1) having an HLB value of 3 to 12 inside the inkjet head can be suppressed, and as a result, an aqueous inkjet ink that also exhibits excellent jetting stability can be obtained. Further, using a combination of the surfactant (B-1-1) and the surfactant (B-1-2) is also desirable in terms of suppressing bleeding of the printed items. Moreover, by including the surfactant (B-1-2) as well as the surfactant (B-1-1) in the aqueous inkjet ink of an embodiment of the present invention, the compatibility with basic solutions described below can be improved, and the ink layer produced using the aqueous inkjet ink becomes more easily separable from the shrink film. As a result, recycling of the shrink film becomes easier.

From the viewpoints of achieving favorable properties for all of the wet spreadability and jetting stability of the aqueous inkjet ink, the compatibility and adhesion between the ink layer and the resin that constitutes the shrink film, and the recyclability of the printed items, the amount of the surfactant (B-1), composed of at least one surfactant selected from the group consisting of acetylenediol-based surfactants and polyoxyalkylene alkyl ether-based surfactants, incorporated in the aqueous inkjet ink of an embodiment of the present invention is preferably within a range from 0.2 to 3.0% by mass, more preferably from 0.5 to 2.5% by mass, and particularly preferably from 0.7 to 2.0% by mass of the total mass of the aqueous inkjet ink.

<<Acetylenediol-Based Surfactant>>

Examples of the acetylenediol-based surfactants mentioned above include 2,3,6,7-tetramethyl-4-octyne-3,6-diol, 2,4,7,9-tetramethyl-5-decyne-4,7-diol, 2,5,8,11-tetramethyl-6-dodecyne-5,8-diol, 2,5-dimethyl-hex-3-yne-2,5-diol, 3,6-dimethyl-oct-4-yne-3,6-diol, 6,9-dimethyl-tetradec-7-yne-6,9-diol, 7,10-dimethylhexadec-8-yne-7,10-diol, as well as the oxyethylene and/or oxypropylene adducts of these compounds. Further, compounds produced using the methods disclosed in JP 2001-215690 A and JP 2002-356451 A may also be used as the acetylenediol-based surfactant. One of these compounds may be used alone, or a combination of two or more compounds may be used.

Among these compounds, from the viewpoint of improving the compatibility and adhesion between the obtained printed item and the shrink film, resulting in improved deformation followability for the printed item, and also from the viewpoint of achieving superior orientation at the interface, when an acetylenediol-based surfactant is used as the surfactant (B-1), 2,4,7,9-tetramethyl-5-decyne-4,7-diol, 2,5,8,11-tetramethyl-6-dodecyne-5,8-diol, and oxyethylene and/or oxypropylene adducts of these two compounds can be used particularly favorably.

In one embodiment, in those cases where the resin that constitutes the shrink film has an aromatic ring structure (for example, in the case where the resin is polyethylene terephthalate or a polystyrene resin) and an acetylenediol-based surfactant is used as the surfactant (B-1), a compound having an oxyethylene group and/or oxypropylene group is preferably used as the acetylenediol-based surfactant. Although the exact reasons are unclear, it is thought that the hydrogen atom bonded to the carbon atom adjacent to the oxygen atom that exists in the oxyethylene group and/or oxypropylene group develops an interaction (CH-$\pi$ interaction) with the aromatic ring structure that exists within the structure of the resin that constitutes the shrink film, thereby improving the compatibility and adhesion with the shrink film, resulting in printed items having superior deformation followability.

From the above viewpoints, from the viewpoint of optimizing the viscoelasticity of the aqueous inkjet ink to improve the jetting stability, and from the viewpoint of improving the recyclability of the printed items, in those cases where an acetylenediol-based surfactant is used as the surfactant (B-1), the number of added moles of oxyethylene groups and/or oxypropylene groups within the molecule of the acetylenediol-based surfactant is preferably within a range from 1 to 10 mol, and particularly preferably from 3 to 8 mol.

In particular, when the acetylenediol-based surfactant is used in the form of a surfactant (B-1-1) having an HLB value within a range from 3 to 12, from the viewpoints of satisfying both the above HLB numerical range and the above numerical range for the number of added moles of oxyethylene groups and/or oxypropylene groups, the use of one or more compounds selected from the group consisting of oxyethylene and oxypropylene adducts of 2,4,7,9-tetramethyl-5-decyne-4,7-diol, oxyethylene adducts of 2,5,8,11-tetramethyl-6-dodecyne-5,8-diol, and oxyethylene and oxypropylene adducts of 2,5,8,11-tetramethyl-6-dodecyne-5,8-diol as the acetylenediol-based surfactant is extremely desirable.

<<Polyoxyalkylene Alkyl Ether-Based Surfactant>>

On the other hand, a compound represented by general formula 3 shown below may be used as the polyoxyalkylene alkyl ether-based surfactant.

General formula 3: $R^1\text{-}O\text{-}(R^2\text{-}O)_n\text{-}H$

In general formula 3, $R^1$ represents an alkyl group of 8 to 18 carbon atoms or alkenyl group of 8 to 18 carbon atoms which may be branched, $R^2$ represents an alkylene group of 2 or 3 carbon atoms which may be branched, and n represents an integer of 2 to 100.

Unlike acetylenediol-based surfactants, polyoxyalkylene alkyl ether-based surfactants have only one hydroxyl group. As a result, from the viewpoint of ensuring adequate hydrophilicity for the polyoxyalkylene alkyl ether-based surfactant, the use of a compound in which $R^2$ in the above general formula 3 is an ethylene group, namely using a polyoxyethylene alkyl ether as the polyoxyalkylene alkyl ether-based surfactant, is preferred. By using a polyoxyethylene alkyl ether of high hydrophilicity, the compatibility with the organic solvent (A-1) improves, and improvements can be more easily achieved for the uniformity of the thickness of the ink layer and the compatibility with the shrink film. Further, as a result, the deformation followability of the printed items improves.

Furthermore, in those cases where the resin that constitutes the shrink film has an aromatic ring structure (for example, in the case where the resin is polyethylene terephthalate or a polystyrene resin) and a polyoxyalkylene alkyl ether-based surfactant is used as the surfactant (B-1), the number of oxyethylene groups and/or oxypropylene groups incorporated in the polyoxyalkylene alkyl ether-based surfactant (namely, the value of n in the above general formula 3) is preferably within a range from 4 to 50, more preferably from 5 to 30, and particularly preferably from 5 to 20. Although only supposition, it is thought that the reason that the preferred number of oxyethylene groups and/or oxypropylene groups per molecule is greater than that observed for the above acetylenediol-based surfactant is that the polyoxyalkylene alkyl ether-based surfactant which has only one hydroxyl group produces fewer hydrogen bonds through the hydroxyl groups than the acetylenediol-based surfactant which has two hydroxyl groups, and therefore in order to improve the compatibility with the shrink film, the amount of CH-$\pi$ interactions must be increased.

Moreover, from the viewpoints of improving the compatibility and adhesion with the resin that constitutes the shrink film, improving the orientation at the interface, and facilitating improvement in the deformation followability of the printed items and suppression of bleeding, the alkyl group that exists at the molecular terminal of the polyoxyalkylene alkyl ether-based surfactant (namely, $R^1$ in the above general formula 3) is preferably an alkyl group of 10 to 18 carbon atoms or alkenyl group of 10 to 18 carbon atoms which may be branched, and is particularly preferably an alkyl group of 12 to 18 carbon atoms or alkenyl group of 12 to 18 carbon atoms which may be branched.

<<Other Surfactants>>

The aqueous inkjet ink of an embodiment of the present invention may also contain one or more surfactants besides the surfactant (B-1) (in this description, referred to as "other surfactants"). However, the amount of these other surfactants is preferably of a level that does not impair the effects of the surfactant (B-1). Specifically, the amount of other surfactants is preferably not more than 70% by mass (and may be 0% by mass), more preferably not more than 65% by mass (and may be 0% by mass), and particularly preferably 50% by mass or less (and may be 0% by mass) of the total mass of all the surfactants incorporated in the aqueous inkjet ink of an embodiment of the present invention.

Examples of other surfactants that may be used include acetylene monool-based surfactants, siloxane-based surfactants, and fluorine-based surfactants. One of these other surfactants may be used alone, or a combination of two or more such surfactants may be used.

In one embodiment, from the viewpoint of obtaining printed items with no bleeding, a siloxane-based surfactant is preferably used as another surfactant. Further, from the viewpoints of achieving superior compatibility between the surfactant (B-1) and the organic solvent (A-1) and good wet spreadability of the aqueous inkjet ink, and contributing to an improvement in the compatibility between the ink layer and the resin that constitutes the shrink film, thereby having no adverse effects on the deformation followability of the printed items, a polyether-modified siloxane-based surfactant is preferably used as the above siloxane-based surfactant, and the use of a polyether-modified siloxane-based surfactant having an oxyethylene group as this polyether-modified siloxane-based surfactant is particularly preferred.

In an aqueous inkjet ink of an embodiment of the present invention, examples of compounds that can be used favorable as the abovementioned polyether-modified siloxane-based surfactant having an oxyethylene group include compounds represented by general formula 4 shown below.

General formula 4:

[Chemical formula 1]

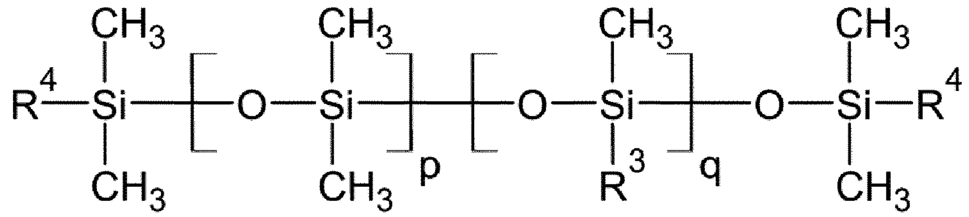

In general formula 4, p represents an integer of 0 to 80, q represents an integer of 0 to 50, $R^3$ represents a structure represented by general formula 5 shown below or an alkyl group of 2 to 6 carbon atoms, and $R^4$ represents a structure represented by general formula 5 shown below or an alkyl group of 1 to 6 carbon atoms. However, compounds in which p and q are both 0, q is 0 and $R^4$ is an alkyl group of 1 to 6 carbon atoms, or q is an integer of 1 to 50, $R^3$ is an alkyl group of 2 to 6 carbon atoms and $R^4$ is an alkyl group of 1 to 6 carbon atoms are excluded.

General formula 5:

[Chemical formula 2]

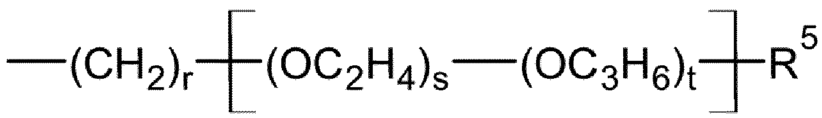

In general formula 5, r represents an integer of 1 to 6, s represents an integer of 1 to 100, t represents an integer of 0 to 50, and $R^5$ represents -OH or -$OR^6$ (wherein $R^6$ is an alkyl group of 1 to 4 carbon atoms). Further, the form of the adduct of the oxyethylene group ($OC_2H_4$) and oxypropylene group ($OC_3H_6$) inside the square brackets [ ] may be either block form or random.

In addition, in those cases where a polyether-modified siloxane-based surfactant having an oxyethylene group is used in the aqueous inkjet ink of an embodiment of the present invention, the use of a polyether-modified siloxane-based surfactant having an oxyethylene group in which the ratio of the number of oxyethylene groups that exist within the molecule relative to the number of silicon (Si) atoms that exist within the molecule is within a range from 0.5 to 2 is particularly desirable. In an aqueous inkjet ink containing this type of polyether-modified siloxane-based surfactant, the oxyethylene group which has hydrophilicity suppresses any expression of hydrophobicity by the silicon (Si) atoms, thereby preventing any deterioration in the deformation followability of the printed items. Further, because the orientation at the interface and the compatibility between the surfactant (B-1) and the organic solvent (A-1) are excellent, and aqueous inkjet ink that exhibits superior suppression of bleeding and excellent jetting stability can be obtained.

In those cases where the aqueous inkjet ink of an embodiment of the present invention uses a polyether-modified siloxane-based surfactant having an oxyethylene group (and preferably a polyether-modified siloxane-based surfactant having an oxyethylene group in which the ratio of the number of oxyethylene groups that exist within the molecule relative to the number of silicon (Si) atoms that exist within the molecule is within a range from 0.5 to 2), the amount of this surfactant is preferably within a range from 0.1 to 3.0% by mass, more preferably from 0.2 to 2.5% by mass, and particularly preferably from 0.3 to 2.0% by mass.

<Resin>

The aqueous inkjet ink of an embodiment of the present invention contains a resin. Further, the weighted average value of the SP values of the resin and the surfactant included in the aqueous inkjet ink is within a range from 9 to 11.5 $(cal/cm^3)^{1/2}$. As mentioned above, by ensuring that the SP values of the resin and the surfactant, which represent the components retained in the ink layer, fall within the above range, the compatibility with the resin that constitutes the shrink film and the deformation followability of the printed item can be improved.

In a similar manner to that described above for the organic solvent, the SP values for the resin and the surfactant represent values calculated by Fedors' estimation method represented by formula 1 shown above. Further, the units for the SP values are $(cal/cm^3)^{1/2}$.

In this description, when calculating the resin SP value, the molecular structure of the polymerizable monomer in a polymerized state is used. For example, in the case of a polyethylene, the SP value is calculated not using ethylene

($CH_2=CH_2$), which represents the polymerizable monomer prior to polymerization, but rather using the structural formula ($-CH_2-CH_2-$) which represents the state of the ethylene following polymerization.

Generally, known forms for the resins incorporated in an aqueous inkjet ink include water-soluble resins and resin microparticles. The above resin incorporated in the aqueous inkjet ink of an embodiment of the present invention may be either a water-soluble resin or resin microparticles. Further, a combination of a water-soluble resin and resin microparticles may also be used.

In this description, a resin having a solubility of at least 1 g in 100 g of water at 25°C is deemed a "water-soluble resin", and a resin for which this solubility is less than 1 g is deemed a "water-insoluble resin". Further, among the water-insoluble resins, those resins that are dispersed in particulate form in water and have a volume-based median diameter (also referred to as D50 in this description) within a range from 10 to 1,000 nm are referred to as "resin microparticles". The D50 value of such resin microparticles represents a value measured in an environment at 25°C in a dispersion medium of water using a dynamic light-scattering particle size distribution analyzer such as the Nanotrac UPA-EX150 manufactured by MicrotracBEL Corporation.

Examples of the types of resins that may be used in the aqueous inkjet ink of an embodiment of the present invention include acrylic resins, styrene reins, styrene-maleic acid (anhydride)-based resins, olefin-maleic acid (anhydride)-based resins, urethane resins, polyester resins, vinyl chloride resins, vinyl chloride-vinyl acetate resins, polyolefin resins, and polyvinyl alcohol resins. One of these resins may be used alone, or a combination of two or more resins may be used.

In this description, the term "acrylic resin" describes a resin formed using at least one compound selected from the group consisting of acrylic acid, methacrylic acid, acrylate esters and methacrylate esters as a polymerizable monomer (although a styrene-based monomer may also be used). Further, the term "maleic acid (anhydride)" means maleic acid and/or maleic anhydride.

The resin may be used for a number of purposes, including pigment dispersion, as a binder, or as a wax or the like. Further, the resin may be used for one particular purpose, or may be used for a combination of purposes. In the aqueous inkjet ink of an embodiment of the present invention, from the viewpoints of imparting strength (fastness) to the ink layer, imparting compatibility and adhesion with the resin used in forming the shrink film, and obtaining printed items with superior followability relative to deformation, the resin is preferably used as a binder. Further, in terms of improving the jetting stability, in those cases where the aqueous inkjet ink of an embodiment of the present invention contains a pigment as a colorant, it is preferable that a different resin from the above resin used as a binder is used for the purpose of pigment dispersion, and/or that the resin used as a binder is also used for the purpose of pigment dispersion (in other words, the binder resin described below also functions as a pigment dispersing resin).

In this description, the expression "used as a binder" means the resin is used for the purposes of imparting strength to the ink layer and/or imparting improved adhesion to the resin used in forming the shrink film. Examples of the resin used as a binder include the resin that constitutes the main component of the layer of the aqueous inkjet ink following drying, specifically, the resin incorporated in an amount of at least 40% by mass (and preferably at least 50% by mass) of the total mass of all the resin within the aqueous inkjet ink of an embodiment of the present invention.

Furthermore, examples of resins used for the purpose of pigment dispersion include resin microparticles that encapsulate the pigment, and water-soluble resins that satisfy the condition described below.

The method used for ascertaining whether or not a target water-soluble resin satisfies the above condition is described below. First, 600 g of a carbon black with a primary particle size of 15 to 25 nm, a nitrogen adsorption specific surface area of 120 to 260 $m^2$/g and a DPB absorption (granular) of 40 to 80 $cm^3$/100g, and 300 g of the target resin were mixed thoroughly with 2,100 g of water (premixing). Subsequently, the premixed mixture was subjected to a dispersion treatment for four hours using a beads mill with a volume of 0.6 L (for example, a "Dyno-Mill" manufactured by Shinmaru Enterprises Corporation) filled with 1,800 g of grinding beads (for example, zirconia beads of diameter 0.5 mm). Following this dispersion treatment, the viscosity at 25°C of the thus obtained carbon black dispersion was measured using an E-type viscometer (for example, a "TVE25L Viscometer" manufactured by Toki Sangyo Co., Ltd.), the carbon black dispersion was then stored for one week inside a forced convection constant temperature oven set to 70°C, and the viscosity was then remeasured. At this time, if the viscosity of the dispersion immediately following the dispersion treatment is 100 mPa·s or lower, and the absolute value for the change in the viscosity of the carbon black dispersion following storage is 10% or less, then the above resin is deemed to have a pigment dispersion function.

Further, the abovementioned use "as a wax" describes a resin which becomes a liquid upon heating and/or pressure application, and is used for the purpose of improving the abrasion resistance of the aqueous inkjet ink layer. From this viewpoint, a resin which has a melting point within a range from 50 to 160°C, melts without decomposing at temperatures exceeding the melting point, and has a melt viscosity at a temperature 10°C higher than the melting point of 10 Pa·s or lower can be adjudged as functioning as a wax.

<<Binder Resin>>

As described above, in one embodiment, in terms of obtaining printed items with superior deformation followability, the aqueous inkjet ink preferably contains a resin that is used as a binder (in this description also referred to as a "binder resin"). In those cases where the aqueous inkjet ink of an embodiment of the present invention contains a binder resin, the type of resin used for that binder resin, selected from among those resins exemplified above, is preferably at least one type of resin selected from the group consisting of acrylic resins, urethane resins and polyester resins.
In those cases where the resin that constitutes the shrink film has an aromatic ring structure (for example, when the resin is a polyethylene terephthalate or polystyrene resin), the binder resin preferably also includes an aromatic ring structure. This enables interactions ($\pi$-$\pi$ interactions) to occur between the aromatic ring structure of the binder resin and the aromatic ring structure of the resin that constitutes the shrink film, improving the compatibility and adhesion of the ink layer with the shrink film, and improving the deformation followability of the printed item. Examples of the type of functional group within the above aromatic ring structures include a phenyl group, naphthyl group, anthryl group, tolyl group, xylyl group, mesityl group and anisyl group.
Further, because of the reason outlined above, but also because in order to enable the abovementioned interactions between molecules of the binder resin to optimize the viscoelasticity of the aqueous inkjet ink, enabling an aqueous inkjet ink of superior jetting stability to be obtained, in those cases where the binder resin includes an aromatic ring structure, the amount of that structure is preferably within a range from 1 to 25% by mass, and particularly preferably from 2 to 20% by mass.
In this description, in those cases where the types and amounts of polymerizable monomers that constitute a resin are known, the abovementioned amount of the aromatic ring structure may use a value calculated using formula 6 shown below. Further, in those cases where the types and amounts of polymerizable monomers that constitute the resin are unclear, NMR (nuclear magnetic resonance) measurement or the like may be used to measure the amount of polymerizable monomer having an aromatic ring structure and the number of moles of that aromatic ring structure, with the amount of the aromatic ring structure then calculated using formula 6 shown below.

Formula 6:

$$(\text{Amount of aromatic ring structure})\ (\%\text{ by mass}) = \sum[(ni \times MS \div Mi) \times Wi]$$

In the above formula 6, ni represents the number of moles, among all of the polymerizable monomers that constitute the resin, of aromatic ring structures within a polymerizable monomer containing that aromatic ring structure (for example, in the case of styrene, ni=1), MS represents the molecular weight (78.1) of the target structure (aromatic ring structure), Mi represents the molecular weight of the polymerizable monomer containing the aromatic ring structure, and Wi represents the amount (% by mass) of the polymerizable monomer having the aromatic ring structure relative to the total mass of all the polymerizable monomers that constitute the resin.
The acid value of the binder resin is preferably within a range from 1 to 80 mgKOH/g, more preferably from 2 to 60 mgKOH/g, still more preferably from 3 to 50 mgKOH/g, and particularly preferably from 5 to 40 mgKOH/g. By ensuring that the acid value falls within this range, printed items of excellent deformation followability with no bleeding can be obtained, and even if a portion of the aqueous inkjet ink dries in the vicinity of the nozzle of the inkjet head, any significant increase in the viscosity of the aqueous inkjet ink can be suppressed, meaning the jetting stability can be improved. An ink layer containing a binder resin having an acid value within the above range detaches readily from the shrink film upon immersion in a basic solution described below. As a result, the recyclability of the shrink film can be improved.
In this description, the "acid value" means the number of mg of potassium hydroxide (KOH) required to neutralize the acid groups within 1 g of the resin. In this description, the acid value uses a value calculated using the following method. For example, in the case where a resin contains a polymerizable monomer, having a molecular weight of Ma and containing na groups of an acid group of valence va within each molecule, in an amount of Wa % by mass relative to the total mass of all the polymerizable monomers that constitute the resin, the acid value (mgKOH/g) of the resin is determined using formula 7 shown below.

Formula 7:

$$(\text{Acid value}) = \{(va \times na \times Wa) \div (100 \times Ma)\} \times 56.11 \times 1000$$

In formula 7, the numerical value "56.11" is the molecular weight of potassium hydroxide.
Further, the SP value of the binder resin is preferably within a range from 9 to 13 $(cal/cm^3)^{1/2}$, and particularly from 9.5 to 12 $(cal/cm^3)^{1/2}$. By using a binder resin having an SP value within this range, the weighted average of the SP values of the resin and the surfactant can be more easily adjusted to a value within the range described above, making it easier to

improve the compatibility with the resin that constitutes the shrink film and the deformation followability of the printed items.

From the viewpoints of jetting stability, deformation followability of the printed items, and ensuring an aqueous inkjet ink with excellent recyclability, the amount of the binder resin incorporated in the aqueous inkjet ink of an embodiment of the present invention, expressed as a solid fraction relative to the total mass of the aqueous inkjet ink, is preferably within a range from 0.5 to 16% by mass, more preferably from 1 to 14% by mass, and particularly preferably from 2.5 to 12% by mass.

<<Pigment Dispersing Resin>>

In those cases where the aqueous inkjet ink of an embodiment of the present invention contains a pigment as a colorant, a resin used for the purpose of pigment dispersion (in this description, also referred to as a "pigment dispersing resin") may be used. In such cases, the type of resin used as the pigment dispersing resin, selected from among those resins exemplified above, is preferably at least one type of resin selected from the group consisting of acrylic resins, styrene-maleic acid (anhydride) resins, and olefin-maleic acid (anhydride) resins.

The acid value of the pigment dispersing resin is preferably within a range from 80 to 400 mgKOH/g, more preferably from 100 to 350 mgKOH/g, and particularly preferably from 110 to 300 mgKOH/g. By ensuring that the acid value falls within this range, the dispersion stability of the pigment can be maintained, and stable jetting from the inkjet head can be achieved regardless of usage conditions. Further, favorable solubility of the pigment dispersing resin in water can be ensured, and favorable interactions can be achieved between molecules of the pigment dispersing resin, meaning the viscosity of the pigment dispersion can be suppressed, and the jetting stability of the aqueous inkjet ink can be further improved.

From the viewpoints of the dispersion stability of the pigment and the jetting stability, the amount of the pigment dispersing resin incorporated in the aqueous inkjet ink of an embodiment of the present invention, expressed as a solid fraction relative to the amount of the pigment, is preferably within a range from 1 to 60% by mass, and more preferably from 2 to 50% by mass.

<<Wax Resin>>

The aqueous inkjet ink of an embodiment of the present invention may also use a resin used as a wax (in this description, also referred to as a "wax resin") for the purpose of improving the abrasion resistance of the printed items. In such cases, the type of resin used as the wax resin, selected from among those resins exemplified above, is preferably a polyolefin resin. In those cases where a polyolefin is used as a wax resin, and the resin that constitutes the shrink film is a polyolefin resin described below, the deformation followability relative to the shrink film can be dramatically improved.

In those cases where the aqueous inkjet ink of an embodiment of the present invention contains a wax resin, and a polyolefin resin is used as that wax resin, the use of an oxidized polyolefin resin and/or an acid-modified polyolefin resin as the polyolefin resin is particularly preferred. Because oxidized polyolefin resins and acid-modified polyolefin resins have acidic groups or other oxygen atom-containing functional groups, these polyolefin resins form interactions with the resin that constitutes the shrink film, improving the compatibility and adhesion of the ink layer to the shrink film, thereby improving the deformation followability of the printed items.

From the viewpoints of the jetting stability and obtaining an aqueous inkjet ink having excellent printed item deformation followability and recyclability, the amount of the wax resin incorporated in the aqueous inkjet ink of an embodiment of the present invention, expressed as a solid fraction relative to the total mass of the aqueous inkjet ink, is preferably within a range from 0.3 to 5% by mass, more preferably from 0.6 to 4% by mass, and particularly preferably from 0.8 to 3% by mass.

Furthermore, from the viewpoint of preventing any mutual impairment of effects, in those cases where the aqueous inkjet ink of an embodiment of the present invention contains both a binder resin and a wax resin, the amount of the wax resin relative to the amount of the binder resin is preferably within a range from 5 to 35% by mass, more preferably from 8 to 30% by mass, and particularly preferably from 10 to 25% by mass.

<Colorant>

The aqueous inkjet ink of an embodiment of the present invention may contain a colorant. Further, in terms of obtaining printed item with superior density and concealing properties, as well as excellent light resistance and water resistance and the like, the use of a pigment as the colorant is preferred.

<<Pigment>>

Conventionally known organic and inorganic pigments may be used as desired as the pigment, and for example,

pigments represented by the following color index names may be used.

In other words, red pigments include C.I. Pigment Red 2, 5, 7, 9, 12, 17, 22, 23, 31, 48:1, 48:2, 48:3, 48:4, 49:1, 49:2, 57:1, 57:2, 112, 122, 123, 146, 147, 149, 150, 166, 168, 170, 171, 175, 176, 177, 178, 184, 185, 188, 202, 207, 209, 254, 255, 260, 264, 266, 269, and 282;

violet pigments include C.I. Pigment Violet 19, 23, 29, 32, 36, 37, 42, and 50;
orange pigments include C.I. Pigment Orange 1, 2, 3, 5, 7, 13, 14, 15, 16, 22, 34, 36, 38, 40, 43, 47, 48, 49, 51, 52, 53, 60, 61, 62, 64, 65, 66, 69, 71, and 73;
blue pigments include C.I. Pigment Blue 15, 15:3, 15:4, 15:6, 16, 60, 64, and 79;
green pigments include C.I. Pigment Green 7, 10, 36, and 48;
yellow pigments include C.I. Pigment Yellow 1, 2, 3, 5, 12, 13, 14, 16, 17, 24, 73, 74, 83, 87, 93, 94, 95, 97, 98, 109, 110, 111, 112, 120, 126, 127, 128, 129, 137, 138, 139, 147, 150, 151, 154, 155, 166, 167, 168, 170, 180, 185, and 213;
black pigments include C.I. Pigment Black 1, 7, and 11; and
white pigments include C.I. Pigment White 4, 5, 6, and 21.

One of these pigments may be used alone, or a combination of two or more pigments may be used. Further, solid solutions formed from two or more of the pigments exemplified above may also be used as the pigment.

The amount of the pigment contained within the aqueous inkjet ink of an embodiment of the present invention may be adjusted in accordance with the intended usage application for the printed item produced using the aqueous inkjet ink, but for example, is preferably within a range from 0.5 to 30% by mass relative to the total mass of the aqueous inkjet ink. Further, other than the case of a white aqueous inkjet ink (an aqueous white ink), in terms of obtaining printed items of high density without impairing the jetting stability of the aqueous inkjet ink, the amount of the pigment is more preferably within a range from 1 to 15% by mass, and particularly preferably from 1.5 to 10% by mass. On the other hand, in the case of an aqueous white ink, in terms of obtaining printed items with superior concealing properties without impairing the jetting stability of the aqueous white ink, the amount of the pigment is more preferably within a range from 5 to 25% by mass, and particularly preferably from 10 to 20% by mass.

<Water>

The aqueous inkjet ink of an embodiment of the present invention contains water as the main component. The water is preferably not a typical water containing a large variety of ions, but rather an iron-exchanged water (deionized water) or distilled water. Further, the amount of water within the aqueous inkjet ink of an embodiment of the present invention is preferably within a range from 40 to 95% by mass, and more preferably from 50 to 90% by mass of the total mass of the aqueous inkjet ink.

<Other Components>

Besides the components described above, the aqueous inkjet ink of an embodiment of the present invention may also contain pH adjusters, preservatives, crosslinking agents, ultraviolet absorbers, and infrared absorbers and the like. Each of these components may use one or more conventionally known compounds.

«pH Adjuster»

For example, the alkanolamines described above can be used to convert the aqueous inkjet ink to basic form, and also function as pH adjusters. Other examples of compounds that can convert the aqueous inkjet ink to basic form include ammonia water; alkali metal hydroxides such as lithium hydroxide, sodium hydroxide, and potassium hydroxide; and alkali metal carbonates (and bicarbonates) such as lithium carbonate, sodium carbonate, sodium bicarbonate, and potassium carbonate. Furthermore, examples of pH adjusters that can be used to convert the aqueous inkjet ink to acidic form include inorganic acids such as hydrochloric acid, sulfuric acid, nitric acid, and phosphoric acid; and organic acids such as acetic acid, propionic acid, butyric acid, maleic acid (anhydride), malonic acid, succinic acid, lactic acid, tartaric acid, malic acid, citric acid, ascorbic acid, and glutamic acid.

<Method for Producing Aqueous Inkjet Ink>

The aqueous inkjet ink of an embodiment of the present invention can be produced using conventional methods. In one example, when a pigment is used as the colorant, the pigment is first dispersed in a medium containing at least water (an aqueous medium) to produce a pigment dispersion. On the other hand, when a water-soluble dye is used as the colorant, the water-soluble dye is first dissolved in an aqueous medium to produce an aqueous solution of the water-soluble dye. Then, water, the organic solvent (A-1) having an SP value within a range from 11 to 13.5 $(cal/cm^3)^{1/2}$ and having at least one hydroxyl group, and the surfactant (B-1) composed of at least one surfactant selected from the group consisting of acetylenediol-based surfactants and polyoxyalkylene alkyl ether-based surfactants, and the like are added to the pigment dispersion and/or the water-soluble dye aqueous solution, and following thorough stirring and mixing, a technique such as filtration or centrifugation is used to remove any coarse particles. However, the method for producing the aqueous inkjet ink of an embodiment of the present invention is not limited to this particular method.

<Properties of Aqueous Inkjet Ink>

The aqueous inkjet ink of an embodiment of the present invention preferably has a viscosity at 25°C within a range from 3 to 15 mPa·s. Provided the viscosity falls within this range, liquid droplets of the aqueous inkjet ink can be jetted stably not only from inkjet heads having a jetting frequency of about 4 to 10 kHz, but also from inkjet heads having a high jetting frequency of about 20 to 70 kHz. In particular, when the viscosity at 25°C of the aqueous inkjet ink of an embodiment of the present invention is within a range from 4 to 10 mPa s, the aqueous inkjet ink can be jetted in a stable manner even when using an inkjet head with a high design resolution of 600 dpi or higher. In this description, values measured in an environment at 25°C using a cone-plate rotational viscometer (E-type viscometer, cone angle: 1°34') such as a TVE25L Viscometer manufactured by Toki Sangyo Co., Ltd. are used for the viscosity.

Further, in terms of obtaining an aqueous inkjet ink with superior jetting stability and printed item print quality, the static surface tension at 25°C of the aqueous inkjet ink of an embodiment of the present invention is preferably within a range from 18 to 35 mN/m, and particularly preferably from 21 to 32 mN/m. In this description, the static surface tension refers to a value measured in an environment at 25°C by the Wilhelmy method (plate method) using an Automatic Surface Tension Meter CBVP-Z manufactured by Kyowa Interface Science Co., Ltd. or similar.

Furthermore, in those cases where the aqueous inkjet ink of an embodiment of the present invention contains a pigment as a colorant, in terms of achieving a combination of superior jetting stability and producing printed items with high levels of density and concealing properties, the volume-based median diameter (D50) of the pigment is preferably within a range from 30 to 450 nm, more preferably from 50 to 400 nm, and particularly preferably from 70 to 350 nm. The D50 value for the pigment can be measured using the same method as that described above for resin microparticles.

<Aqueous Inkjet Ink Set>

A single aqueous inkjet ink of an embodiment of the present invention may be used alone, or two or more aqueous inkjet inks may be combined and used as an aqueous inkjet ink set. Examples of this aqueous inkjet ink set include a 4-color aqueous inkjet ink set composed of a cyan aqueous inkjet ink (aqueous cyan ink), a magenta aqueous inkjet ink (aqueous magenta ink), a yellow aqueous inkjet ink (aqueous yellow ink), and a black aqueous inkjet ink (aqueous black ink) (namely, a process color ink set); and a 5-color aqueous inkjet ink set in which an aqueous white ink is added to the above process color ink set. It is preferable that all of the aqueous inkjet inks that constitute the aqueous inkjet ink set satisfy the requirements of an embodiment of the present invention described above.

<Ink-Pretreatment Liquid Set>

The aqueous inkjet ink of an embodiment of the present invention and the aqueous inkjet ink set described above may also be used in combination with a pretreatment liquid containing a coagulant (an ink-pretreatment liquid set). By applying a pretreatment liquid containing a coagulant to the printing substrate prior to printing the aqueous inkjet ink, a layer (ink aggregation layer) that intentionally aggregates the solid components contained in the aqueous inkjet ink can be formed. By subsequently jetting the aqueous inkjet ink onto this ink aggregation layer, coalescence and bleeding of liquid droplets of the aqueous inkjet ink can be prevented, enabling a dramatic improvement in the print quality of the printed item.

Examples of substances that may be used as the above coagulant include water-soluble inorganic salts or organic salts containing polyvalent metal ions, and resins (cationic resins) having at least one type of cationic group selected from the group consisting of a primary amino group, secondary amino group, tertiary amino group and quaternary ammonium group, and having an amine value larger than the acid value.

In such cases, from the viewpoint of enhancing the adhesion between the shrink film and the ink aggregation layer, and the adhesion between the ink aggregation layer and the ink layer, enabling printed items of particularly superior deformation followability to be obtained, in those cases where a water-soluble inorganic salt or organic salt containing a polyvalent metal ion is used as the coagulant, a salt of an anion having a hydroxyl group (for example, a lactate ion, malate ion, 3-hydroxy-3-methylbutyrate ion, gluconate ion, or pantothenate ion) and a polyvalent metal ion (for example, a magnesium ion or calcium ion) can be used particularly favorably.

In those cases where the amount of the coagulant in the pretreatment liquid is expressed in terms of the cation equivalent concentration, from the viewpoint of obtaining printed items having superior deformation followability and good

suppression of bleeding, the pretreatment liquid cation equivalent concentration is preferably within a range from 0.07 to 1.40 meq/g, more preferably from 0.11 to 1.10 meq/g, and particularly preferably from 0.15 to 0.80 meq/g.

The abovementioned "pretreatment liquid cation equivalent concentration" is the number of equivalents of components having cationicity (polyvalent metal ions and cationic groups within cationic resins) that exist in each 1 g of the pretreatment liquid. For example, the cation equivalent concentration of a pretreatment liquid containing 5% by mass of (anhydrous) calcium acetate can be calculated as $\{(5/100) \times 2/158.17\} \times 1{,}000 \fallingdotseq 0.63$ (meq/g). In this formula, the "2" represents the valency of the calcium ion that represents the cation component, and the "158.17" represents the molecular weight of the (anhydrous) calcium acetate.

In one embodiment, the above pretreatment liquid preferably contains a resin used as a binder. In this description, a resin used as a binder contained within the pretreatment liquid is referred to as a "pretreatment liquid binder resin". By including a pretreatment liquid binder resin in the pretreatment liquid, the compatibility and adhesion between the shrink film and the ink aggregation layer, and between the ink aggregation layer and the ink layer can be enhanced, enabling printed items with particularly superior deformation followability to be obtained.

The pretreatment liquid binder resin preferably has similar properties to those described above for the binder resin incorporated in the aqueous inkjet ink. Specifically, from the viewpoint of obtaining printed items with excellent deformation followability, in those cases where the resin that constitutes the shrink film has an aromatic ring structure (for example, in the case where the resin is polyethylene terephthalate or a polystyrene resin), the pretreatment liquid binder resin preferably includes an aromatic ring structure. Further, the amount of that structure is preferably within a range from 1 to 25% by mass, and particularly preferably from 2 to 20% by mass.

Further, from the viewpoint of making it easier to recycle the shrink film by enabling the ink layer (and the ink aggregation layer) to be easily detached from the shrink film by immersion in a basic solution described below, the acid value of the pretreatment liquid binder resin is preferably within a range from 1 to 80 mgKOH/g, more preferably from 2 to 60 mgKOH/g, still more preferably from 3 to 50 mgKOH/g, and particularly preferably from 5 to 40 mgKOH/g.

Examples of the types of resin that may be used as the pretreatment liquid binder resin include acrylic resins, styrene resins, urethane resins, polyester resins, and polyvinyl alcohol resins. One of these resins may be used alone, or a combination of two or more resins may be used. In particular, in those cases where the aqueous inkjet ink also contains a binder resin, from the viewpoints of improving the compatibility and adhesion with the ink layer, and improving the deformation followability of the printed items, the use of a resin of the same type as the binder resin contained in the aqueous inkjet ink is preferred.

Further, the pretreatment liquid binder resin may be a water-soluble resin or resin microparticles, or a combination of a water-soluble and resin microparticles may be used.

From the viewpoints of obtaining printed items with superior deformation followability and recyclability, and ensuring no inhibition of the effects of the coagulant described above (such as suppression of bleeding), the amount of the pretreatment liquid binder resin incorporated in the pretreatment liquid, expressed as a solid fraction relative to the total mass of the pretreatment liquid, is preferably within a range from 1 to 20% by mass, more preferably from 2 to 15% by mass, and particularly preferably from 2.5 to 12% by mass.

The pretreatment liquid may contain an organic solvent and/or a surfactant. In this description, an organic solvent incorporated in the pretreatment liquid is termed a "pretreatment liquid organic solvent", and similarly, a surfactant incorporated in the pretreatment liquid is termed a "pretreatment liquid surfactant". Further, the types of compounds that may be used as the pretreatment liquid organic solvent and the pretreatment liquid surfactant include the same organic solvents and surfactants described above for inclusion in the aqueous inkjet ink of an embodiment of the present invention.

In one embodiment, in those cases where a pretreatment liquid is applied the shrink film using the inkjet printing method described below, the composition of the pretreatment liquid is preferably similar to that of the above aqueous inkjet ink of an embodiment of the present invention. Specifically, the pretreatment liquid preferably contains the coagulant, a pretreatment liquid organic solvent having an SP value within a range from 11 to 13.5 $(cal/cm^3)^{1/2}$ and having at least one hydroxyl group, a pretreatment liquid surfactant composed of at least one surfactant selected from the group consisting of acetylenediol-based surfactants and polyoxyalkylene alkyl ether-based surfactants, and a pretreatment liquid binder resin, wherein the amount of the pretreatment liquid organic solvent is within a range from 5 to 30% by mass of the total mass of the pretreatment liquid, and the weighted average value of the SP values of the pretreatment liquid binder resin and the pretreatment liquid surfactant is within a range from 9 to 11.5 $(cal/cm^3)^{1/2}$. By using a pretreatment liquid with this type of composition, an ink aggregation layer that exhibits deformation followability relative to the shrink film can be obtained, and uniform wet spreadability on the shrink film can be achieved, enabling printed items of excellent print quality with no bleeding to be obtained. Further, the jetting stability of the pretreatment liquid can also be improved.

<Printed Item>

A printed item that represents one embodiment of the present invention (hereinafter also referred to a simply a "printed item of an embodiment of the present invention") is produced by printing the aqueous inkjet ink of an embodiment

of the present invention onto a shrink film using an inkjet printing method. Further, in those cases where an aqueous inkjet ink set composed of a combination of two or more aqueous inkjet inks is used, the printed item of an embodiment of the present invention may have an ink layer composed a plurality of layers formed using the aqueous inkjet ink set. Moreover, in those cases where a combination of the aqueous inkjet ink of an embodiment of the present invention and the pretreatment liquid described above is used, the printed item of an embodiment of the present invention also has an ink aggregation layer formed using the pretreatment liquid.

<Method for Producing Printed Item>

When producing a printed item of an embodiment of the present invention, a step (1) of printing the aqueous inkjet ink of an embodiment of the present invention onto a shrink film, and a step (2), conducted after printing, of drying the shrink film are preferably conducted in this sequence. Further, in those cases where the aqueous inkjet ink of an embodiment of the present invention is used in combination with an abovementioned pretreatment liquid, a step (0) of applying the pretreatment liquid to the shrink film is preferably performed prior to step (1).

<Shrink Film>

As described above, the aqueous inkjet ink of an embodiment of the present invention is used on a shrink film. In this description, the term "shrink film" specifically refers to a film for which the shrinkage rate when heated at 100°C for 20 seconds in accordance with the method prescribed in JIS Z 1709 is at least 10% in the machine direction (MD) and/or the transverse direction (TD).

As mentioned above, a printed item produced using the aqueous inkjet ink of an embodiment of the present invention exhibits excellent followability relative to deformation. Accordingly, the aqueous inkjet ink of an embodiment of the present invention can be used favorably with shrink films for which the shrinkage rate in the machine direction (MD) and/or the transverse direction (TD) is 20% or higher, and can be used particularly favorably with shrink films for which the shrinkage rate is 40% or higher.

In one embodiment, the shrink film preferably shrinks predominantly in one of either the MD or TD directions. Because shrinkage occurs predominantly in only one direction, the excellent deformation followability of the printed item produced using the aqueous inkjet ink of an embodiment of the present invention can be utilized favorably, and no wrinkling or cracking occurs in the ink layer following shrinkage. In this type of case, the shrinkage rate in the direction in which predominant shrinkage does not occur, measured under the conditions described above, is preferably not more than 25% and less than the shrinkage rate in the direction of predominant shrinkage, is more preferably not more than 15% and less than the shrinkage rate in the direction of predominant shrinkage, and particularly preferably not more than 10% and less than the shrinkage rate in the direction of predominant shrinkage. Further, the ratio between the shrinkage rate in the direction in which predominant shrinkage occurs and the shrinkage rate in the direction in which predominant shrinkage does not occur is preferably within a range from 3-fold to 100-fold, more preferably from 5-fold to 100-fold, and particularly preferably from 8-fold to 100-fold.

Examples of resins that may be used as the resin that constitutes the shrink film include polyester resin such as polyethylene terephthalate (PET, 13.2); polyolefin resins such as polyethylene (PE, 8.6), polypropylene (PP, 8.0), polyethylene-polypropylene composites; as well as polystyrene resins (PS, 10.6) and polylactic acid resins (PLA, 12.1). Further, films produced by laminating a plurality of different resins (laminated films) may also be used. One example of such as laminated film is a film produced by laminating together a polystyrene and PET. The numerical values in the above parentheses represent the SP value (units: $(cal/cm^3)^{1/2}$) of each resin.

In particular, by using a shrink film formed from a resin having an SP value within a range from 9.0 to 14.5 $(cal/cm^3)^{1/2}$, the compatibility with the organic solvent (A-1) can be enhanced, and the deformation followability of the printed items produced using the aqueous inkjet ink of an embodiment of the present invention can be well utilized. Specifically, among the resins exemplified above, a shrink film formed from at least one resin selected from the group consisting of polyethylene terephthalate, polystyrene resins and polylactic acid resins can be used favorably.

<Pretreatment Liquid Application Step (0)>

In step (0), the method used for applying the pretreatment liquid to the shrink film may be a method for printing the pretreatment liquid onto the shrink film via a non-contact method such as an inkjet printing method, or may be a coating method in which the pretreatment liquid is brought into contact with the shrink film. A specific example of the inkjet printing method is similar to that used for the aqueous inkjet ink, and is described below in detail. On the other hand, in those cases where a coating method in which the pretreatment liquid is brought into contact with the shrink film is used as the pretreatment liquid application method, a coating device such as a gravure coater, offset gravure coater, doctor coater, bar coater, blade coater, flexo coater, air doctor coater, or roll coater may be used. Among these, in terms of facilitating stable

and uniform application regardless of the type of resin that constitutes the shrink film, and offering easy adjustment of the coating quantity so that, for example, by adjusting the coating quantity depending on the printing substrate, printed items of superior deformation followability and recyclability with no bleeding can be obtained, a gravure coater, offset gravure coater or flexo coater can be used particularly favorably.

In this description, the expression "application of the pretreatment liquid" is used as a generic expression that includes printing of the pretreatment liquid via a non-contact method and coating of the pretreatment liquid via contact with the printing substrate.

From the viewpoint of obtaining printed items having excellent deformation followability and recyclability with no bleeding, the thickness of the layer of the pretreatment liquid immediately following application is preferably within a range from 1 to 10 μm, more preferably from 2 to 8 μm, and particularly preferably from 3 to 7 μm.

<Drying Step following Pretreatment Liquid Application (0A)>

Following the above step (0), the state of dryness of the pretreatment liquid on the shrink film when the aqueous inkjet ink is printed may be selected as desired.

In one embodiment, the pretreatment liquid is preferably dried before the printing of the aqueous inkjet ink. In other words, in the state immediately prior to impact of the liquid droplets of the aqueous inkjet ink, the residual amount of volatile components (water and organic solvent) contained in the pretreatment liquid on the shrink film is preferably not more than 15% by mass (and more preferably not more than 10% by mass, still more preferably not more than 5% by mass, and particularly preferably 2% by mass or less) of the total mass of volatile components contained in the pretreatment liquid prior to application to the shrink film. By printing the aqueous inkjet ink following drying of the pretreatment liquid, the jetted aqueous inkjet ink is less likely to suffer drying faults, enabling a printed item of superior deformation followability to be obtained.

In such cases, following step (0) but before step (1), a step of drying the pretreatment liquid on the shrink film (hereinafter also referred to as "the drying step (0A)") is preferably provided. There are no particular limitations on the method used for drying the pretreatment liquid in this drying step (0A), and examples of methods that may be used include conventional methods such as heated drying methods, convection drying methods, infrared drying methods, microwave drying methods, drum drying methods, and high-frequency dielectric heating methods. One of these drying methods may be use alone, or a plurality of methods may be combined, although in terms of reducing damage to the shrink film while ensuring efficient drying, the use of a convection drying method and/or infrared drying method is preferred.

<Preliminary Drying Step following Pretreatment Liquid Application (0B)>

On the other hand, in another embodiment, the aqueous inkjet ink may be printed onto the wet-state pretreatment liquid. In this description, the expression that the pretreatment liquid is in a "wet state" means that in the state immediately prior to impact of the liquid droplets of the aqueous inkjet ink, the residual amount of volatile components (water and organic solvent) contained in the pretreatment liquid on the shrink film is preferably at least 50% by mass (and more preferably at least 75% by mass, and particularly preferably 90% by mass or more) of the total mass of volatile components contained in the pretreatment liquid prior to application to the shrink film. Printed items of excellent recyclability with no bleeding can be obtained by printing the aqueous inkjet ink onto a wet-state pretreatment liquid.

In such cases, following step (0) but before step (1), it is preferable that either no drying step is provided, or a step of drying only a portion of the pretreatment liquid on the shrink film (hereinafter also referred to as "the preliminary drying step (0B)") is provided. From the viewpoint of avoiding excessive drying of the pretreatment liquid, the method used for drying the pretreatment liquid in this preliminary drying step is, for example, preferably an ambient temperature drying method or a visible light drying method or the like. Further, the types of methods mentioned above for use in the drying step (0A) may also be employed with an appropriate adjustment in the amount of energy applied to the printed item. Moreover, one of these methods may be used alone, or a plurality of methods may be combined.

<Aqueous Inkjet Ink Printing Step (1)>

In those cases where the aqueous inkjet ink of an embodiment of the present invention is used in combination with a pretreatment liquid, in order to ensure favorable manifestation of the effects of the present invention, in step (1), it is preferable that at least a portion of the aqueous inkjet ink is printed so as to overlap with the region on which the pretreatment liquid has been applied, and more preferable that the aqueous inkjet ink is printed so as to only overlap the region on which the pretreatment liquid has been applied.

In step (1), the same aqueous inkjet ink may be used to fill a plurality of inkjet heads, with the aqueous inkjet ink then printed onto the shrink film from each of these inkjet heads. Further, the aqueous inkjet ink in each inkjet head may be jetted from the inkjet head in a heated state. In such cases, the heating temperature of the aqueous inkjet ink inside the

inkjet head is preferably within a range from 30 to 50°C, and particularly preferably from 30 to 45°C. Moreover, the aqueous inkjet ink may also be printed while the shrink film is heated from the rear surface (the opposite surface from the surface on which the aqueous inkjet ink is printed). In such cases, heating is preferably conducted so that the temperature of the surface to which the aqueous inkjet ink is printed is within a range from 30 to 55°C, and particularly from 35 to 50°C.

Further, as described above, the aqueous inkjet ink may include a plurality of aqueous inkjet inks (an aqueous inkjet ink set). In such cases, one or more of the aqueous inkjet inks that constitute the aqueous inkjet ink set may be loaded into each of the plurality of inkjet heads, with the aqueous inkjet inks then printed onto the shrink film from each inkjet head.

In one embodiment, in the case where the aqueous inkjet ink set includes an aqueous white ink, at least the aqueous white ink is preferably loaded into each of the plurality of inkjet heads and then printed onto the shrink film from each inkjet head. This enables the printed item of an embodiment of the present invention with no bleeding to be provided with excellent visibility.

<Inkjet Printing Method>

As described above the aqueous inkjet ink is printed onto the shrink film using an inkjet printing method. Further, in those cases where the aqueous inkjet ink of an embodiment of the present invention is used in combination with a pretreatment liquid, an inkjet printing method may also be selected as the method for applying the pretreatment liquid to the shrink film. In such cases, the inkjet printing method used for the printing may employ a single pass method in which the aqueous inkjet ink or the like is only jetted once onto the shrink film, or may employ a serial method in which the aqueous inkjet ink or the like is jetted onto the shrink film while a short shuttle head is scanned back and forth in a direction perpendicular to the transport direction of the shrink film. Further, specific examples of the single pass method include a method in which the inkjet head is scanned only once across the stationary printing substrate (called a "head-scanning single pass method" in this description), and a method in which the printing substrate is passed once beneath a fixed inkjet head while printing is conducted (called a "head-fixed single pass method" in this description). In the present invention, any of the above methods may be employed, but from the viewpoints of not requiring adjustments in the jetting timing of the aqueous inkjet ink or the like relative to the scanning of the inkjet head, and avoiding deviations in the impact position, meaning printed items of excellent print quality with no bleeding can be obtained, the head-fixed single pass method can be used particularly favorably.

In terms of achieving images of superior print quality, the design resolution of the inkjet head used in the head-fixed single pass method is preferably at least 600 dpi (dots per inch), and more preferably 720 dpi or higher.

<Drying Step following Aqueous Inkjet Ink Printing (2)>

The aqueous inkjet ink printed onto the shrink film (together with the pretreatment liquid in those cases where a pretreatment liquid is also used), are subjected to a drying step (2) to obtain the printed item of an embodiment of the present invention. Specific examples of the method used for drying the aqueous inkjet ink or the like in the drying step (2) include the same methods as those described above for use in the drying step (0A) performed following application of the pretreatment liquid. Further, one of these drying methods may be use alone, or a plurality of methods may be combined. Particularly in terms of reducing damage to the shrink film while ensuring efficient drying, the use of a convection drying method and/or infrared drying method is preferred.

In one embodiment, the drying temperature (the temperature of the shrink film) in the above drying step (2) is preferably so that the shrinkage rate upon heating for 10 seconds in accordance with the method prescribed in JIS Z 1709 is not more than 25% in the machine direction (MD) and the transverse direction (TD). This shrinkage rate is more preferably not more than 15%, and particularly preferably 10% or less. Heating at such a temperature enables production of a printed item without impairing the functionality of the shrink film, and the effects of the printed item of an embodiment of the present invention in achieving excellent followability relative to deformation of the shrink film can be well utilized.

<Shrink Label>

The printed item of an embodiment of the present invention can be used, for example, as a shrink label. Examples of shrink target objects on which a shrink label is used include containers for beverages, solid foodstuffs, cosmetics, detergents, and pharmaceuticals and the like. Furthermore, examples of the material for those containers include plastics such as polyethylene terephthalate (PET), polyethylene, and polypropylene; metals such as aluminum and steel; and glass and the like.

<Method for Recycling Printed Item and Shrink Label>

A printed item of an embodiment of the present invention that meets the preferred requirements described above,

and a shrink label produced using that printed item, can be easily recycled.

One example of a method for recycling a printed item of an embodiment of the present invention and a shrink label produced using the printed item is a method in which the shrink film is separated from the printed item and shrink label, enabling production of a recycled plastic product. Further, examples of the method for producing the recycled plastic product include a method in which the separated shrink film is crushed or the like to produce flakes or pellets, and a method in which the separated shrink film is subjected to a chemical decomposition or the like to reproduce polymerizable monomers, and those polymerizable monomers are then used to produce a resynthesized plastic.

Moreover, an example of the method used for separating the shrink film is a method including a basic solution immersion step. In this immersion step, the printed item or the like is immersed in a basic solution, and the shrink film is separated. In order to improve the separation efficiency, a printed item or the like that has been crushed or ground in advance may be used. In this description, the expression "printed item or the like" refers to a printed item and/or a shrink label produced using that printed item.

The above basic solution contains at least a liquid medium and a basic material. In terms of being capable of holding the printed item or the like without dissolving it, thereby improving the recyclability, the liquid medium preferably contains water. Further, in such cases, the amount of water is preferably at least 80% by mass of the overall liquid medium, and particularly preferably 90% by mass or higher.

For example, an alkali metal hydroxide can be used as the basic material. Among the various options, from the viewpoints of basicity strength (a large pKb value), good solubility in aqueous mediums, and ease of availability, sodium hydroxide or potassium hydroxide can be used particularly favorably as the above alkali metal hydroxide. The amount (concentration) of the basic material, relative to the total mass of the basic solution, is preferably within a range from 0.2 to 15% by mass, more preferably from 0.5 to 12% by mass, and particularly preferably from 1 to 10% by mass. By ensuring the concentration falls within this range, the basic solution holds sufficient basicity for the separation process. Further, even if the basic solution does not penetrate into the interior of the printed item, permeation from the surface and/or edges of the printed item still enables ready separation of the shrink film.

In the immersion step, the temperature of the mixture of the printed item or the like and the basic solution is preferably within a range from 20 to 120°C, more preferably from 25 to 110°C, still more preferably from 28 to 90°C, and particularly preferably from 30 to 80°C. Moreover, the length of time for which the immersion step is executed within this preferred temperature range is preferably within a range from 1 minute to 24 hours, more preferably from 1 minute to 12 hours, and particularly preferably from 1 minute to 6 hours.

During the immersion, the separation is preferably conducted while the mixture is stirred. For example, when stirring is conducted with a rotating blade, the rotational rate is preferably within a range from 80 to 250 rpm, and more preferably from 80 to 200 rpm.

The amount used of the basic solution is preferably within a range from 100-fold to 1,000,000-fold the mass of the printed item or the like. In order to reduce the amount used of the basic solution, a separation device that enables circulation of the basic solution may be used.

From the viewpoint of being unaffected by the basic solution during recycling, and enabling a printed item (or a shrink label produced using the printed item) to be obtained that is suited to recycling, the material of the shrink film that constitutes the printed item (or shrink label produced using the printed item) is preferably polyethylene terephthalate, polyethylene or polypropylene.

In those cases where the material of the shrink target object for the shrink film is a plastic, recycling may also be conducted of the entire article with the attached shrink label. One example of the recycling method in such cases is a method in which the article is ground, and the shrink film and the shrink target object are separated from the ground product and used to produce recycled plastic.

In those cases where an entire article with the attached shrink label is recycled, in terms of achieving good efficiency during the recycling, namely, not requiring further separation of the separated shrink film and the shrink target object, but rather using the mixture of the separated shrink film and the shrink target object to produce recycled plastic, the shrink film and the shrink target object are preferably composed of the same type of resin. From this viewpoint, in those cases where the entire article with the attached shrink label is recycled, the resin that constitutes the shrink film is preferably one or more resins selected from the group consisting of polyethylene terephthalate, polyethylene and polypropylene. Further, if consideration is also given to materials which, as described above, are best able to utilize the deformation followability of printed items of an embodiment of the present invention, then polyethylene terephthalate is particularly desirable as the resin that constitutes the shrink film.

## EXAMPLES

The aqueous inkjet ink of an embodiment of the present invention is described below in further detail using a series of examples and comparative examples. In the following description, unless specifically stated otherwise, the units "parts" and "%" represent "parts by mass" and "by mass" respectively.

Further, the mass average molecular weights of the resins used in the following examples are polystyrene-equivalent values measured in accordance with the method prescribed in JIS K 7252. Specifically, these values were measured using an HLC-8320GPC apparatus manufactured by Tosoh Corporation fitted with a TSKgel (a registered trademark) column and an RI detector manufactured by Tosoh Corporation, and using tetrahydrofuran as the eluent.

<Production of Pigment Dispersion>

A mixing vessel (capacity: 10 L) fitted with a stirrer was charged with 450 g of LIONOL BLUE 7919 (C.I. Pigment Blue 15:3) manufactured by TOYOCOLOR Co., Ltd. as a pigment, 90 g of a random copolymer formed from styrene/acrylic acid/behenyl acrylate = 45/30/25 (mass ratio) in which all of the acid groups had been neutralized with dimethylaminoethanol (acid value: 233.6 mgKOH/g, SP value: 11.7 $(cal/cm^3)^{1/2}$, mass average molecular weight: 20,000) as a pigment dispersing resin, and 2,460 g of ion-exchanged water, and the resulting mixture was stirred for one hour (premixing). Subsequently, using a Dyno-Mill (capacity: 0.6 L) manufactured by Shinmaru Enterprises Corporation filled with 1,800 g of zirconia beads of diameter 0.5 mm, a circulating dispersion of the mixture was commenced. Then, once every prescribed time period (for example, one hour), the apparatus described above was used to measure the D50 value for the mixture, and when the D50 value had been reduced to 150 nm or less, the circulating dispersion was halted, completing production a cyan pigment dispersion.

Further, with the exception of using FASTOGEN SUPER MAGENTA RG (C.I. Pigment Red 122) manufactured by DIC Corporation as the pigment, a magenta pigment dispersion was produced using the same raw materials and the same method as that described above for the cyan pigment dispersion.

<Production Examples for Aqueous Solutions of Acrylic Resins 1 to 9>

A reaction vessel of capacity 10 L fitted with a gas inlet tube, a thermometer, a condenser and a stirrer was charged with 2,800 g of butanol, and following flushing of the interior of the vessel with nitrogen gas, the internal temperature was raised to 110°C. Subsequently, a mixture of 120 g of methacrylic acid, 300 g of styrene, 330 g of methyl methacrylate, 750 g of butyl acrylate, 600 g of butyl methacrylate, 450 g of stearyl methacrylate and 450 g of 2-hydroxyethyl methacrylate as polymerizable monomers; and 180 g of dimethyl 2,2'-azobisisobutyrate (V-601 manufactured by FUJIFII,M Wako Pure Chemical Corporation) was added dropwise to the reaction vessel over a period of two hours. Following completion of the dropwise addition, a polymerization reaction was conducted for 3 hours with the internal temperature of the reaction vessel maintained at 110°C, an additional 18 g of dimethyl 2,2'-azobisisobutyrate was then added, and the polymerization reaction was continued for one hour with the internal temperature maintained at 110°C. Subsequently, the interior of the reaction vessel was cooled to ambient temperature, 125 g of dimethylethanolamine was added to neutralize the reaction product, and 1,000 g of ion-exchanged water was then added. The mixed solution was then heated to remove the butanol by distillation, and ion-exchanged water was used to adjust the solid fraction concentration to 30% by mass, thus obtaining an aqueous solution of the acrylic resin 1 (solid fraction concentration: 30% by mass). The acid value of the acrylic resin 1, calculated using the method described above, was 26.1 mgKOH/g, and the amount of aromatic ring structures contained in the acrylic resin 1 was 7.5% by mass. Moreover, the SP value of the acrylic resin 1 was 10.7 $(cal/cm^3)^{1/2}$.

In this description, the term "aqueous solution" means a solution containing an aqueous medium and one or more components dispersed and/or dissolved in the aqueous medium.

With the exceptions of altering the types and amounts used of the polymerizable monomers, and altering the amount of dimethylethanolamine added following cooling of the reaction vessel as shown in Table 1, the same operations as those described above for the acrylic resin 1 were used to obtain aqueous solutions of acrylic resins 2 to 9 (each having a solid fraction concentration of 30% by mass). The amounts of the polymerizable monomers and dimethylethanolamine used during production of the acrylic resins 1 to 9, and the acid values, amounts of aromatic ring structures and SP values for the acrylic resins 1 to 9 are shown in Table 1.

[Table 1]

| | Acrylic resin 1 | Acrylic resin 2 | Acrylic resin 3 | Acrylic resin 4 | Acrylic resin 5 | Acrylic resin 6 | Acrylic resin 7 | Acrylic resin 8 | Acrylic resin 9 |
|---|---|---|---|---|---|---|---|---|---|
| Styrene | 300 | 300 | 300 | | 780 | | | | |
| Benzyl methacrylate | | | | 150 | | 450 | | 450 | 450 |
| Acrylic acid | | | | | | 75 | 105 | | |
| Methacrylic acid | 120 | 225 | 315 | 120 | 120 | 75 | | 120 | 120 |

(continued)

| | Acrylic resin 1 | Acrylic resin 2 | Acrylic resin 3 | Acrylic resin 4 | Acrylic resin 5 | Acrylic resin 6 | Acrylic resin 7 | Acrylic resin 8 | Acrylic resin 9 |
|---|---|---|---|---|---|---|---|---|---|
| Methyl methacrylate | 330 | 225 | 135 | 150 | | 900 | 1,395 | 150 | |
| Butyl acrylate | 750 | 750 | 750 | 930 | 750 | | 600 | 600 | 780 |
| Butyl methacrylate | 600 | 600 | 600 | 750 | 600 | 300 | 600 | 600 | |
| 2-ethylhexyl acrylate | | | | | | 900 | 300 | | |
| Stearyl methacrylate | 450 | 450 | 450 | 450 | 450 | | | | |
| 2-hydroxyethyl methacrylate | 450 | 450 | 450 | 450 | 300 | 300 | | | |
| GLM | | | | | | | | 1,080 | 1,650 |
| Amount (g) of dimethylethanolamine added after reaction vessel cooling | 125 | 234 | 327 | 125 | 125 | 171 | 130 | 125 | 125 |
| Acid value (mgKOH/g) | 26.1 | 48.9 | 68.5 | 26.1 | 26.1 | 35.8 | 27.3 | 26.1 | 26.1 |
| Amount of aromatic ring structures (%) | 7.5 | 7.5 | 7.5 | 2.2 | 19.5 | 6.6 | 0 | 6.6 | 6.6 |
| SP value ($(cal/cm^3)^{1/2}$) | 10.7 | 10.8 | 10.9 | 10.7 | 10.5 | 10.8 | 10.4 | 11.9 | 12.7 |

In Table 1, "GLM" represents glycerol monomethacrylate (GLM-EX manufactured by NOF Corporation).

<Production Examples for Aqueous Dispersions of Acrylic Resins 10 to 12>

A reaction vessel of capacity 10 L fitted with a gas inlet tube, a thermometer, a condenser and a stirrer was charged with 2,480 g of ion-exchanged water and 1.2 parts of sodium polyoxyethylene lauryl ether sulfate (LATEMUL E-150, manufactured by Kao Corporation) as an emulsifier. Meanwhile, a separate mixing vessel fitted with a stirrer was prepared and charged with 16 g of methacrylic acid, 200 g of styrene, 284 g of methyl methacrylate, 500 g of butyl acrylate, 400 g of butyl methacrylate, 400 g of stearyl methacrylate and 200 g of 2-hydroxyethyl methacrylate as polymerizable monomers; 1,280 g of ion-exchanged water; and 16 g of sodium polyoxyethylene lauryl ether sulfate (LATEMUL E-150, manufactured by Kao Corporation) as an emulsifier, and the resulting mixture was stirred and mixed to form an emulsion.

Then, 160 g of the above emulsion was collected and added to the reaction vessel, the internal temperature was then raised to 80°C while the inside of the reaction vessel was thoroughly flushed with nitrogen gas. Subsequently, 80 g of a 5% aqueous solution of potassium persulfate and 160 g of a 1% aqueous solution of anhydrous sodium bisulfite were added, and a polymerization reaction was started. Following commencement of the polymerization reaction, the internal temperature of the reaction vessel was held at 80°C while the remainder of the above emulsion, 24 g of the 5% aqueous solution of potassium persulfate and 50 g of the 1% aqueous solution of anhydrous sodium bisulfite were added dropwise over a period of 1.5 hours, and stirring was then continued for an additional two hours. Subsequently, the interior of the reaction vessel was cooled to ambient temperature, 17 g of dimethylethanolamine was added, and ion-exchanged water was used to adjust the solid fraction concentration to 30% by mass, thus obtaining an aqueous dispersion of the acrylic resin10 (solid fraction concentration: 30% by mass).

With the exceptions of altering the types and amounts used of the polymerizable monomers, and altering the amount of dimethylethanolamine added following cooling of the reaction vessel as shown in Table 2, the same operations as those described above for the acrylic resin 10 were used to obtain aqueous solutions of acrylic resins 11 and 12 (each having a solid fraction concentration of 30% by mass). The amounts of the polymerizable monomers and dimethylethanolamine used during production of the acrylic resins 10 to 12, and the acid values, amounts of aromatic ring structures and SP values for the acrylic resins 10 to 12 are shown in Table 2.

[Table 2]

| | Acrylic resin 10 | Acrylic resin 11 | Acrylic resin 12 |
|---|---|---|---|
| Styrene | 200 | 70 | |
| Acrylic acid | | | 50 |
| Methacrylic acid | 16 | 30 | |
| Methyl methacrylate | 284 | | 590 |
| Butyl acrylate | 500 | 500 | 400 |
| Butyl methacrylate | 400 | | 960 |
| Stearyl methacrylate | 400 | 1,200 | |
| 2-hydroxyethyl methacrylate | 200 | 200 | |
| Amount (g) of dimethylethanolamine added after reaction vessel cooling | 17 | 32 | 62 |
| Acid value (mgKOH/g) | 5.2 | 9.8 | 19.5 |
| Amount of aromatic ring structures (%) | 7.5 | 2.6 | 0 |
| SP value ($(cal/cm^3)^{1/2}$) | 10.4 | 9.9 | 10.3 |

<Production Examples for Urethane Resins 13 and 14>

A reaction vessel of capacity 10 L fitted with a gas inlet tube, a thermometer, a condenser and a stirrer was charged with 870 g of a polypropylene glycol (molecular weight: 1,000) and 890 g of isophorone diisocyanate as polymerizable monomers, together with 0.14 g of dibutyltin dilaurate, and following flushing of the interior of the reaction vessel with nitrogen gas, the internal temperature of the reaction vessel was raised to 100°C and a polymerization reaction was conducted for 5 hours. Then, the internal temperature of the reaction vessel was cooled to about 60°C, 180 g of dimethylolpropionic acid and 60 g of neopentyl glycol as polymerizable monomers, and 3,000 g of methyl ethyl ketone were added, the temperature inside the reaction vessel was once again raised to 80°C, and a polymerization reaction was conducted. Subsequently, the interior of the reaction vessel was cooled to ambient temperature, and 400 g of methanol was added to halt the reaction. Then, water was added, and a potassium hydroxide solution was added under constant stirring to neutralize the product. The mixed solution was then heated under reduced pressure to remove the methyl ethyl ketone and unreacted methanol by distillation, and water was added to adjust the solid fraction concentration to 10% by mass, thus obtaining an aqueous solution of the urethane resin 13 (solid fraction concentration: 10% by mass).

Further, with the exceptions of altering the types and amounts used of the polymerizable monomers as shown in Table 3, the same operations as those described above for the urethane resin 13 were used to obtain an aqueous solution of a urethane resin 14 (solid fraction concentration: 10% by mass). The amounts of the polymerizable monomers used during production of the urethane resins 13 and 14, and the acid values, amounts of aromatic ring structures and SP values for the urethane resins 13 and 14 are shown in Table 3.

[Table 3]

| | Urethane resin 13 | Urethane resin 14 |
|---|---|---|
| PPG1000 | 870 | |
| PTMG2000 | | 794 |
| Isophorone diisocyanate | 890 | |
| 4,4'-diphenylmethane diisocyanate | | 884 |
| Dimethylolpropionic acid | 180 | 262 |
| Neopentyl glycol | 60 | 60 |
| Acid value (mgKOH/g) | 43.5 | 59.3 |
| Amount of aromatic ring structures (%) | 0.0 | 24.7 |
| SP value ($(cal/cm^3)^{1/2}$) | 9.4 | 11.0 |

In Table 3, "PPG1000" represents a polypropylene glycol (molecular weight: 1,000), and "PTMG2000" represents a polytetramethylene ether glycol (molecular weight: 2,000).

<Production of Aqueous Inkjet Inks>

Using the blend formulations shown below in each of the columns in Table 4, the various raw materials were added to a mixing vessel fitted with a stirrer. Following addition of all of the raw materials, each of the resulting mixtures was stirred thoroughly at room temperature (25°C) until a uniform mixture was obtained. Subsequently, the mixtures were each filtered through a membrane filter with a pore size of 0.65 μm to complete production of aqueous inkjet inks 1 to 93. In the production of these aqueous inkjet inks, for each column in Table 4, the components were added to the mixing vessel in sequence, starting from the material in the top row. However, in those cases where any particular component was not included in the ink, the sequence skipped that component and the next component was added, whereas in the case of components containing two or more raw materials, the order of addition of those raw materials within the component was arbitrary. Moreover, the addition of each raw material was conducted while the mixture inside the mixing vessel was under constant stirring.

[Table 4]

| | | | | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|---|---|---|
| Aqueous inkjet ink No. | | | | 1 | 2 | 3 | 4 | 5 | 6 | 7 | 8 | 9 | 10 | 11 | 12 | 13 | 14 | 15 | 16 | 17 | 18 | 19 | 20 |
| Ion-exchanged water | | | | 34.8 | 39.8 | 34.8 | 34.8 | 34.8 | 34.8 | 34.8 | 34.8 | 34.8 | 37.3 | 37.3 | 37.3 | 37.3 | 37.3 | 37.3 | 19.8 | 52.3 | 29.8 | 39.8 | 34.8 |
| Organic solvents | Organic solvent having SP value of 11 to 13.5 $(cal/cm^3)^{1/2}$ and having a hydroxyl group (A-1) | 1,2-propanediol | SP value = 13.5, boiling point = 188°C | 25 | | 20 | | | | | | | 20 | 17.5 | 17.5 | 17.5 | 17.5 | 17.5 | 23 | 5 | 7.5 | | |
| | | 1,2-butanediol | SP value = 12.8, boiling point = 193°C | | 15 | | 20 | 5 | | | | | | | | | | | | | 7.5 | | |
| | | 1,2-pentanediol | SP value = 12.2, boiling point = 210°C | | | | | 15 | | | | | | | | | | | | | | | |
| | | 2-aminoisobutanol | SP value = 12.2, boiling point = 166°C | | | | | | | | | | | | | | | | 1 | | | | |
| | | 2,4-pentanediol | SP value = 12.0, boiling point = 198°C | | | | | | 20 | | | | | | | | | | | | 2.5 | | |
| | | 1,2-hexanediol | SP value = 11.8, boiling point = 223°C | | | | | | | 15 | | | | | | | | | | 1.5 | | | |
| | | n-propanol | SP value = 11.8, boiling point = 97°C | | | | | | | 5 | | | | | | | | | | | | | |
| | | 2-methyl-1,3-pentanediol | SP value = 11.6, boiling point = 218°C | | | | | | | | 15 | | | | | | | | | | 2.5 | | |
| | | propylene glycol monomethyl ether | SP value = 11.3, boiling point = 121°C | | | 5 | 5 | 5 | 5 | 5 | 5 | 5 | 2.5 | 2.5 | 2.5 | 2.5 | 2.5 | 2.5 | | | 2.5 | | |
| | | dimethylethanolamine | SP value = 11.3, boiling point = 135°C | | | | | | | | 5 | | | | | | | | | 1 | | | |
| | | diethylene glycol monomethyl ether | SP value = 11.2, boiling point = 193°C | | | | | | | | | 20 | | 2.5 | | | | | | | | | |
| | Organic solvent having SP value of at least 10 but less than 11 $(cal/cm^3)^{1/2}$ and having a hydroxyl group (A-2) | diethylene glycol monoethyl ether | SP value = 10.9, boiling point = 196°C | | | | | | | | | | | | 2.5 | | | | | | 2.5 | | |
| | | diethylene glycol mono-n-butyl ether | SP value = 10.5, boiling point = 231°C | | | | | | | | | | | | | | | | | | | | |
| | | propylene glycol mono-n-butyl ether | SP value = 10.4, boiling point = 170°C | | | | | | | | | | | | | 2.5 | | | 7.5 | | | | |
| | | diethylene glycol monoisobutyl ether | SP value = 10.4, boiling point = 217°C | | | | | | | | | | | | | | 2.5 | | 7.5 | | | | |
| | | dipropylene glycol mono-n-propyl ether | SP value = 10.1, boiling point = 212°C | | | | | | | | | | | | | | | 2.5 | | | 5 | | |
| | Other | diethylene glycol methyl ethyl ether | SP value = 8.2, boiling point = 179°C | | 5 | | | | | | | | | | | | | | | | | 20 | 20 |
| | | ethylene glycol diethyl ether | SP value = 7.9, boiling point = 121°C | | | | | | | | | | | | | | | | 1 | | | | 5 |
| Surfactants | Acetylenediol-based surfactant | SURFYNOL 104 | SP value = 10.4, HLB value = 3.0 | 1 | 1 | 1 | 1 | 1 | 1 | 1 | 1 | 1 | 1 | 1 | 1 | 1 | 1 | 1 | 1 | 1 | 1 | 1 | 1 |
| | Siloxane-based surfactant | Siloxane-based surfactant 2 | SP value = 8.1<br>oxyethylene groups/Si atoms = 1.2 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Binder resin | Acrylic resin (solid fraction: 30%) | Acrylic resin 1 | SP value = 10.7, acid value = 26.1<br>aromatic ring structure content = 7.5% | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 |
| Pigment dispersion (cyan, magenta) | | | | 20 | 20 | 20 | 20 | 20 | 20 | 20 | 20 | 20 | 20 | 20 | 20 | 20 | 20 | 20 | 20 | 20 | 20 | 20 | 20 |
| Other | Preservative | BITaq | | 1 | 1 | 1 | 1 | 1 | 1 | 1 | 1 | 1 | 1 | 1 | 1 | 1 | 1 | 1 | 1 | 1 | 1 | 1 | 1 |
| Specifications | Amount of organic solvent (A-1) [%] | | | 25.0 | 15.0 | 25.0 | 25.0 | 25.0 | 25.0 | 25.0 | 25.0 | 25.0 | 22.5 | 22.5 | 20.0 | 20.0 | 20.0 | 20.0 | 24.0 | 7.5 | 22.5 | 0.0 | 0.0 |
| | Weighted average value of SP values of resins and surfactants $[(cal/cm^3)^{1/2}]$ | | | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 |
| | Amount of other organic solvent relative to total mass of organic solvent | | | 0% | 25% | 0% | 0% | 0% | 0% | 0% | 0% | 0% | 0% | 0% | 11% | 11% | 11% | 11% | 38% | 0% | 25% | 100% | 100% |
| | Amount of organic solvent (A-2) relative to total mass of other organic solvent | | | --- | 0% | --- | --- | --- | --- | --- | --- | --- | --- | --- | 100% | 100% | 100% | 100% | 94% | --- | 100% | 0% | 0% |
| | Boiling point of organic solvent (weighted average value) [°C] | | | 188 | 190 | 175 | 179 | 189 | 183 | 177 | 182 | 179 | 181 | 181 | 181 | 179 | 184 | 183 | 188 | 188 | 192 | 179 | 167 |
| | Amount of other surfactant relative to total mass of surfactants | | | 60% | 60% | 60% | 60% | 60% | 60% | 60% | 60% | 60% | 60% | 60% | 60% | 60% | 60% | 60% | 60% | 60% | 60% | 60% | 60% |
| | Amount of binder resin (%) | | | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |

[Table 4 continued 1]

| Aqueous inkjet ink No. | | | | 21 | 22 | 23 | 24 | 25 | 26 | 27 | 28 | 29 | 30 | 31 | 32 | 33 | 34 | 35 | 36 | 37 | 38 | 39 | 40 |
|---|---|---|---|---|---|---|---|---|---|---|---|---|---|---|---|---|---|---|---|---|---|---|---|
| Ion-exchanged water | | | | 54.8 | 54.8 | 49.8 | 39.8 | 29.8 | 24.8 | 37.3 | 37.3 | 37.3 | 37.3 | 37.3 | 29.8 | 29.8 | 29.8 | 29.8 | 29.8 | 29.8 | 39.8 | 39.8 | 39.8 |
| Organic solvents | Organic solvent having SP value of 11 to 13.5 $(cal/cm^3)^{1/2}$ and having a hydroxyl group (A-1) | 1,2-propanediol | SP value = 13.5, boiling point = 188°C | 3 | 4 | 8 | 16 | 25 | 30 | 17.5 | 17.5 | 17.5 | 17.5 | 17.5 | 12.5 | 15 | 12.5 | 17.5 | 10 | 12.5 | 12.5 | 10.5 | 8 |
| | | 2,4-pentanediol | SP value = 12.0, boiling point = 198°C | | | | | | | | | | | | | | | | 17.5 | 5 | | | |
| | | 1,2-hexanediol | SP value = 11.8, boiling point = 223°C | | | | | | | | | | | | | | | 5 | | | | | |
| | | n-propanol | SP value = 11.8, boiling point = 97°C | | | | | | | | | | | | 7.5 | 5 | | | | | | | |
| | | 2-methyl-1,3-pentanediol | SP value = 11.6, boiling point = 218°C | | | | | | | | | | | | | | 2.5 | | | | | | |
| | | propylene glycol monomethyl ether | SP value = 11.3, boiling point = 121°C | 0.5 | 1 | 2 | 4 | 5 | 5 | 2.5 | 2.5 | 2.5 | 2.5 | 2.5 | 10 | 10 | 15 | 7.5 | 2.5 | | 3.5 | 2.5 | 2 |
| | | diethylene glycol monomethyl ether | SP value = 11.2, boiling point = 193°C | | | | | | | | | | | | | | | | | 12.5 | | | |
| | Organic solvent having SP value of at least 10 but less than 11 $(cal/cm^3)^{1/2}$ and having a hydroxyl group (A-2) | propylene glycol mono-n-butyl ether | SP value = 10.4, boiling point = 170°C | | | | | | | 1 | 1.3 | 1.6 | 1.9 | 2.3 | | | | | | | 4 | 7 | 10 |
| | Other | diethylene glycol methyl ethyl ether | SP value = 8.2, boiling point = 179°C | 1.5 | | | | | | 1.5 | 1.2 | 0.9 | 0.6 | 0.2 | | | | | | | | | |
| | | ethylene glycol diethyl ether | SP value = 7.9, boiling point = 121°C | | | | | | | | | | | | | | | | | | | | |
| Surfactants | Acetylenediol-based surfactant | SURFYNOL 104 | SP value = 10.4, HLB value = 3.0 | 1 | 1 | 1 | 1 | 1 | 1 | 1 | 1 | 1 | 1 | 1 | 1 | 1 | 1 | 1 | 1 | 1 | 1 | 1 | 1 |
| | Siloxane-based surfactant | Siloxane-based surfactant 2 | SP value = 8.1 oxyethylene groups/Si atoms = 1.2 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Binder resin | Acrylic resin (solid fraction: 30%) | Acrylic resin 1 | SP value = 10.7, acid value = 26.1 aromatic ring structure content = 7.5% | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 |
| Pigment dispersion (cyan, magenta) | | | | 20 | 20 | 20 | 20 | 20 | 20 | 20 | 20 | 20 | 20 | 20 | 20 | 20 | 20 | 20 | 20 | 20 | 20 | 20 | 20 |
| Other | Preservative | BITaq | | 1 | 1 | 1 | 1 | 1 | 1 | 1 | 1 | 1 | 1 | 1 | 1 | 1 | 1 | 1 | 1 | 1 | 1 | 1 | 1 |
| Specifications | Amount of organic solvent (A-1) [%] | | | 3.5 | 5.0 | 10.0 | 20.0 | 30.0 | 35.0 | 20.0 | 20.0 | 20.0 | 20.0 | 20.0 | 30.0 | 30.0 | 30.0 | 30.0 | 30.0 | 30.0 | 16.0 | 13.0 | 10.0 |
| | Weighted average value of SP values of resins and surfactants $[(cal/cm^3)^{1/2}]$ | | | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 | 10.3 |
| | Amount of other organic solvent relative to total mass of organic solvent | | | 30% | 0% | 0% | 0% | 0% | 0% | 11% | 11% | 11% | 11% | 11% | 0% | 0% | 0% | 0% | 0% | 0% | 20% | 35% | 50% |
| | Amount of organic solvent (A-2) relative to total mass of other organic solvent | | | 0% | --- | --- | --- | --- | --- | 40% | 52% | 64% | 76% | 92% | --- | --- | --- | --- | --- | --- | 100% | 100% | 100% |
| | Boiling point of organic solvent (weighted average value) [°C] | | | 179 | 175 | 175 | 175 | 177 | 178 | 179 | 179 | 179 | 179 | 179 | 143 | 151 | 157 | 177 | 188 | 192 | 173 | 173 | 172 |
| | Amount of other surfactant relative to total mass of surfactants | | | 60% | 60% | 60% | 60% | 60% | 60% | 60% | 60% | 60% | 60% | 60% | 60% | 60% | 60% | 60% | 60% | 60% | 60% | 60% | 60% |
| | Amount of binder resin (%) | | | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |

[Table 4 continued 2]

| Aqueous inkjet ink No. | | | | 41 | 42 | 43 | 44 | 45 | 46 | 47 | 48 | 49 | 50 | 51 | 52 | 53 | 54 | 55 |
|---|---|---|---|---|---|---|---|---|---|---|---|---|---|---|---|---|---|---|
| Ion-exchanged water | | | | 34.8 | 34.8 | 34.8 | 34.8 | 34.8 | 34.8 | 34.8 | 34.8 | 34.8 | 34.8 | 34.8 | 34.8 | 34.8 | 34.8 | 34.8 |
| Organic solvents | Organic solvent having SP value of 11 to 13.5 $(cal/cm^3)^{1/2}$ and having a hydroxyl group (A-1) | 1,2-propanediol | SP value = 13.5, boiling point = 188°C | 20 | 20 | 20 | 20 | 20 | 20 | 20 | 20 | 20 | 20 | 20 | 20 | 20 | 20 | 20 |
| | | propylene glycol monomethyl ether | SP value = 11.3, boiling point = 121°C | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Organic solvent having SP value of at least 10 but less than 11 $(cal/cm^3)^{1/2}$ and having a hydroxyl group (A-2) | Dipropylene glycol mono-n-propyl ether | SP value = 10.1, boiling point = 212°C | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Surfactants | Acetylenediol-based surfactants | SURFYNOL 104 | SP value = 10.4, HLB value = 3.0 | | | | | | | | | | | | | | | |
| | | SURFYNOL 420 | SP value = 10.3, HLB value = 4.0 | | 1 | | | | | | | | | | | | | |
| | | SURFYNOL 440 | SP value = 10.1, HLB value = 8.1 | | | 1 | | | | | | | | | | | | |
| | | SURFYNOL 2502 | SP value = 9.7, HLB value = 7.8 | | | | 1 | | | | | | | | | | | |
| | | DYNOL 607 | SP value = 9.8, HLB value = 11.0 | | | | | 1 | | | | | | | | | | |
| | | SURFYNOL 465 | SP value = 9.8, HLB value = 13.2 | | | | | | 1 | | | | | | | | | |
| | Polyoxyalkylene alkyl ether-based surfactants | EMALEX 705 | SP value = 9.6, HLB value = 10.8 | | | | | | | 1 | | | | | | | | |
| | | EMALEX 710 | SP value = 9.5, HLB value = 14.1 | | | | | | | | 1 | | | | | | | |
| | | EMALEX 720 | SP value = 9.5, HLB value = 16.5 | | | | | | | | | 1 | | | | | | |
| | | EMALEX 730 | SP value = 9.4, HLB value = 17.5 | | | | | | | | | | 1 | | | | | |
| | | EMALEX 750 | SP value = 9.4, HLB value = 18.4 | | | | | | | | | | | 1 | | | | |
| | | NONION S-207 | SP value = 9.4, HLB value = 10.7 | | | | | | | | | | | | 1 | | | |
| | | NONION S-215 | SP value = 9.4, HLB value = 14.2 | | | | | | | | | | | | | 1 | | |
| | | NIKKOL BB-10 | SP value = 9.3, HLB value = 11.5 | | | | | | | | | | | | | | 1 | |
| | | NIKKOL BB-20 | SP value = 9.3, HLB value = 14.6 | | | | | | | | | | | | | | | 1 |
| | Siloxane-based surfactants | Siloxane-based surfactant 2 | SP value = 8.1 oxyethylene groups/Si atoms = 1.2 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | Siloxane-based surfactant 4 | SP value = 8.1 oxyethylene groups/Si atoms = 0.48 | 1 | | | | | | | | | | | | | | |
| Binder resin | Acrylic resin (solid fraction: 30%) | Acrylic resin 1 | SP value = 10.7, acid value = 26.1 aromatic ring structure content = 7.5% | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 |
| Pigment dispersion (cyan, magenta) | | | | 20 | 20 | 20 | 20 | 20 | 20 | 20 | 20 | 20 | 20 | 20 | 20 | 20 | 20 | 20 |
| Other | Preservative | BITaq | | 1 | 1 | 1 | 1 | 1 | 1 | 1 | 1 | 1 | 1 | 1 | 1 | 1 | 1 | 1 |
| Specifications | Amount of organic solvent (A-1) [%] | | | 22.5 | 22.5 | 22.5 | 22.5 | 22.5 | 22.5 | 22.5 | 22.5 | 22.5 | 22.5 | 22.5 | 22.5 | 22.5 | 22.5 | 22.5 |
| | Weighted average value of SP values of resins and surfactants $[(cal/cm^3)^{1/2}]$ | | | 10.0 | 10.2 | 10.2 | 10.2 | 10.2 | 10.2 | 10.1 | 10.1 | 10.1 | 10.1 | 10.1 | 10.1 | 10.1 | 10.1 | 10.1 |
| | Amount of other organic solvent relative to total mass of organic solvent | | | 10% | 10% | 10% | 10% | 10% | 10% | 10% | 10% | 10% | 10% | 10% | 10% | 10% | 10% | 10% |
| | Amount of organic solvent (A-2) relative to total mass of other organic solvent | | | 100% | 100% | 100% | 100% | 100% | 100% | 100% | 100% | 100% | 100% | 100% | 100% | 100% | 100% | 100% |
| | Boiling point of organic solvent (weighted average value) [°C] | | | 184 | 184 | 184 | 184 | 184 | 184 | 184 | 184 | 184 | 184 | 184 | 184 | 184 | 184 | 184 |
| | Amount of other surfactant relative to total mass of surfactants | | | 100% | 60% | 60% | 60% | 60% | 60% | 60% | 60% | 60% | 60% | 60% | 60% | 60% | 60% | 60% |
| | Amount of binder resin (%) | | | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |

[Table 4 continued 3]

| Aqueous inkjet ink No. | | | | 56 | 57 | 58 | 59 | 60 | 61 | 62 | 63 | 64 | 65 | 66 | 67 | 68 | 69 | 70 | 71 |
|---|---|---|---|---|---|---|---|---|---|---|---|---|---|---|---|---|---|---|---|
| Ion-exchanged water | | | | 37.3 | 37.3 | 37.3 | 36.8 | 36.3 | 34.8 | 34.8 | 34.8 | 35.6 | 35.3 | 33.8 | 32.8 | 36.2 | 35.3 | 33.8 | 32.8 |
| Organic solvents | Organic solvent having SP value of 11 to 13.5 $(cal/cm^3)^{1/2}$ and having a hydroxyl group (A-1) | 1,2-propanediol | SP value = 13.5, boiling point = 188°C | 17.5 | 17.5 | 17.5 | 17.5 | 20 | 20 | 20 | 20 | 20 | 20 | 20 | 20 | 20 | 20 | 20 | 20 |
| | | propylene glycol monomethyl ether | SP value = 11.3, boiling point = 121°C | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Organic solvent having SP value of at least 10 but less than 11 $(cal/cm^3)^{1/2}$ and having a hydroxyl group (A-2) | Dipropylene glycol mono-n-propyl ether | SP value = 10.1, boiling point = 212°C | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Surfactants | Acetylenediol-based surfactants | SURFYNOL 104 | SP value = 10.4, HLB value = 3.0 | 0.5 | | | | 1 | 1 | 1 | 1 | 0.2 | 0.5 | 2 | 3 | 1 | 1 | 1 | 1 |
| | | SURFYNOL 420 | SP value = 10.3, HLB value = 4.0 | | | | 0.5 | | | | | | | | | | | | |
| | | SURFYNOL 2502 | SP value = 9.7, HLB value = 7.8 | | 0.5 | | 0.5 | | | | | | | | | | | | |
| | | DYNOL 607 | SP value = 9.8, HLB value = 11.0 | | | 0.5 | | | | | | | | | | | | | |
| | | SURFYNOL 465 | SP value = 9.8, HLB value = 13.2 | 0.5 | | | 0.5 | | | | | | | | | | | | |
| | Polyoxyalkylene alkyl ether-based surfactants | EMALEX 720 | SP value = 9.5, HLB value = 16.5 | | | | 0.5 | | | | | | | | | | | | |
| | | EMALEX 730 | SP value = 9.4, HLB value = 17.5 | | 0.5 | | | | | | | | | | | | | | |
| | | NONION S-215 | SP value = 9.4, HLB value = 14.2 | | | 0.5 | | | | | | | | | | | | | |
| | Siloxane-based surfactants | Siloxane-based surfactant 1 | SP value = 8.9 oxyethylene groups/Si atoms = 1.7 | | | | | | 1.5 | | | | | | | | | | |
| | | Siloxane-based surfactant 2 | SP value = 8.1 oxyethylene groups/Si atoms = 1.2 | 1.5 | 1.5 | 1.5 | 0.5 | | | | | 1.5 | 1.5 | 1.5 | 1.5 | 0.1 | 1 | 2.5 | 3.5 |
| | | Siloxane-based surfactant 3 | SP value = 7.9 oxyethylene groups/Si atoms = 0.67 | | | | 0.5 | | | 1.5 | | | | | | | | | |
| | | Siloxane-based surfactant 4 | SP value = 8.1 oxyethylene groups/Si atoms = 0.48 | | | | | | | | 1.5 | | | | | | | | |
| Binder resin | Acrylic resin (solid fraction: 30%) | Acrylic resin 1 | SP value = 10.7, acid value = 26.1 aromatic ring structure content = 7.5% | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 | 16.7 |
| Pigment dispersion (cyan, magenta) | | | | 20 | 20 | 20 | 20 | 20 | 20 | 20 | 20 | 20 | 20 | 20 | 20 | 20 | 20 | 20 | 20 |
| Other | Preservative | BITaq | | 1 | 1 | 1 | 1 | 1 | 1 | 1 | 1 | 1 | 1 | 1 | 1 | 1 | 1 | 1 | 1 |
| Specifications | Amount of organic solvent (A-1) [%] | | | 20.0 | 20.0 | 20.0 | 20.0 | 22.5 | 22.5 | 22.5 | 22.5 | 22.5 | 22.5 | 22.5 | 22.5 | 22.5 | 22.5 | 22.5 | 22.5 |
| | Weighted average value of SP values of resins and surfactants $[(cal/cm^3)^{1/2}]$ | | | 10.2 | 10.1 | 10.1 | 10.2 | 10.7 | 10.4 | 10.2 | 10.3 | 10.2 | 10.2 | 10.3 | 10.3 | 10.7 | 10.4 | 10.0 | 9.8 |
| | Amount of other organic solvent relative to total mass of organic solvent | | | 11% | 11% | 11% | 11% | 10% | 10% | 10% | 10% | 10% | 10% | 10% | 10% | 10% | 10% | 10% | 10% |
| | Amount of organic solvent (A-2) relative to total mass of other organic solvent | | | 100% | 100% | 100% | 100% | 100% | 100% | 100% | 100% | 100% | 100% | 100% | 100% | 100% | 100% | 100% | 100% |
| | Boiling point of organic solvent (weighted average value) [°C] | | | 183 | 183 | 183 | 183 | 184 | 184 | 184 | 184 | 184 | 184 | 184 | 184 | 184 | 184 | 184 | 184 |
| | Amount of other surfactant relative to total mass of surfactants | | | 60% | 60% | 60% | 33% | 0% | 60% | 60% | 60% | 88% | 75% | 43% | 33% | 9% | 50% | 71% | 78% |
| | Amount of binder resin (%) | | | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 | 5.0 |

[Table 4 continued 4]

| | | | | 72 | 73 | 74 | 75 | 76 | 77 | 78 | 79 | 80 | 81 | 82 | 83 |
|---|---|---|---|---|---|---|---|---|---|---|---|---|---|---|---|
| Aqueous inkjet ink No. | | | | 72 | 73 | 74 | 75 | 76 | 77 | 78 | 79 | 80 | 81 | 82 | 83 |
| Ion-exchanged water | | | | 37.3 | 37.3 | 37.3 | 37.3 | 37.3 | 37.3 | 37.3 | 37.3 | 37.3 | 37.3 | 37.3 | 4 |
| Organic solvents | Organic solvent having SP value of 11 to 13.5 $(cal/cm^3)^{1/2}$ and having a hydroxyl group (A-1) | 1,2-propanediol | SP value = 13.5, boiling point = 188°C | 17.5 | 17.5 | 17.5 | 17.5 | 17.5 | 17.5 | 17.5 | 17.5 | 17.5 | 17.5 | 17.5 | 17.5 |
| | | propylene glycol monomethyl ether | SP value = 11.3, boiling point = 121°C | 2.5 | 2.5 | 2.5 | 2.5 | 2.5 | 2.5 | 2.5 | 2.5 | 2.5 | 2.5 | 2.5 | 2.5 |
| | Organic solvent having SP value of at least 10 but less than 11 $(cal/cm^3)^{1/2}$ and having a hydroxyl group (A-2) | Propylene glycol mono-n-butyl ether | SP value = 10.4, boiling point = 170°C | 2.5 | 2.5 | 2.5 | 2.5 | 2.5 | 2.5 | 2.5 | 2.5 | 2.5 | 2.5 | 2.5 | 2.5 |
| Surfactants | Acetylenediol-based surfactant | SURFYNOL 104 | SP value = 10.4, HLB value = 3.0 | 1 | 1 | 1 | 1 | 1 | 1 | 1 | 1 | 1 | 1 | 1 | 1 |
| | Siloxane-based surfactant | Siloxane-based surfactant 2 | SP value = 8.1<br>oxyethylene groups/Si atoms = 1.2 | 1.5 | 1.5 | 1.5 | 1.5 | 1.5 | 1.5 | 1.5 | 1.5 | 1.5 | 1.5 | 1.5 | 1.5 |
| Binder resins | Acrylic resins (each with solid fraction: 30%) | Acrylic resin 1 | SP value = 10.7, acid value = 26.1<br>aromatic ring structure content = 7.5% | | | | | | | | | | | | |
| | | Acrylic resin 2 | SP value = 10.8, acid value = 48.9<br>aromatic ring structure content = 7.5% | 16.7 | | | | | | | | | | | |
| | | Acrylic resin 3 | SP value = 10.9, acid value = 68.5<br>aromatic ring structure content = 7.5% | | 16.7 | | | | | | | | | | |
| | | Acrylic resin 4 | SP value = 10.7, acid value = 26.1<br>aromatic ring structure content = 2.2% | | | 16.7 | | | | | | | | | |
| | | Acrylic resin 5 | SP value = 10.5, acid value = 26.1<br>aromatic ring structure content = 19.5% | | | | 16.7 | | | | | | | | |
| | | Acrylic resin 6 | SP value = 10.8, acid value = 35.8<br>aromatic ring structure content = 6.6% | | | | | 16.7 | | | | | | | |
| | | Acrylic resin 7 | SP value = 10.4, acid value = 27.3<br>aromatic ring structure content = 0% | | | | | | 16.7 | | | | | | |
| | | Acrylic resin 8 | SP value = 11.9, acid value = 26.1<br>aromatic ring structure content = 6.6% | | | | | | | 16.7 | | | | | |
| | | Acrylic resin 9 | SP value = 12.7, acid value = 26.1<br>aromatic ring structure content = 6.6% | | | | | | | | 16.7 | | | | |
| | | Acrylic resin 10 | SP value = 10.4, acid value = 5.2<br>aromatic ring structure content = 7.5% | | | | | | | | | 16.7 | | | |
| | | Acrylic resin 11 | SP value = 9.9, acid value = 9.8<br>aromatic ring structure content = 2.6% | | | | | | | | | | 16.7 | | |
| | | Acrylic resin 12 | SP value = 10.3, acid value = 19.5<br>aromatic ring structure content = 0% | | | | | | | | | | | 16.7 | |
| | Urethane resin (solid fraction: 10%) | Urethane resin 13 | SP value = 9.4, acid value = 43.5<br>aromatic ring structure content = 0% | | | | | | | | | | | | 50 |
| Pigment dispersion (cyan, magenta) | | | | 20 | 20 | 20 | 20 | 20 | 20 | 20 | 20 | 20 | 20 | 20 | 20 |
| Other | Preservative | BITaq | | 1 | 1 | 1 | 1 | 1 | 1 | 1 | 1 | 1 | 1 | 1 | 1 |
| Specifications | Amount of organic solvent (A-1) [%] | | | 20.0 | 20.0 | 20.0 | 20.0 | 20.0 | 20.0 | 20.0 | 20.0 | 20.0 | 20.0 | 20.0 | 20.0 |
| | Weighted average value of SP values of resins and surfactants $[(cal/cm^3)^{1/2}]$ | | | 10.3 | 10.4 | 10.2 | 10.2 | 10.3 | 10.1 | 11.0 | 11.5 | 10.1 | 9.7 | 10.0 | 9.5 |
| | Amount of other organic solvent relative to total mass of organic solvent | | | 11% | 11% | 11% | 11% | 11% | 11% | 11% | 11% | 11% | 11% | 11% | 11% |
| | Amount of organic solvent (A-2) relative to total mass of other organic solvent | | | 100% | 100% | 100% | 100% | 100% | 100% | 100% | 100% | 100% | 100% | 100% | 100% |
| | Boiling point of organic solvent (weighted average value) [°C] | | | 179 | 179 | 179 | 179 | 179 | 179 | 179 | 179 | 179 | 179 | 179 | 179 |
| | Amount of other surfactant relative to total mass of surfactants | | | 60% | 60% | 60% | 60% | 60% | 60% | 60% | 60% | 60% | 60% | 60% | 60% |
| | Amount of binder resin (%) | | | 5.0 | 5.0 | 5.0 | 5.0 | 5.0 | 5.0 | 5.0 | 5.0 | 5.0 | 5.0 | 5.0 | 5.0 |

[Table 4 continued 5]

| Aqueous inkjet ink No. | | | | 84 | 85 | 86 | 87 | 88 | 89 | 90 | 91 | 92 |
|---|---|---|---|---|---|---|---|---|---|---|---|---|
| Ion-exchanged water | | | | 4 | 31.6 | 12.8 | 20.9 | 30.7 | 50.7 | 45.7 | 14 | 4 |
| Organic solvents | Organic solvent having SP value of 11 to 13.5 $(cal/cm^3)^{1/2}$ and having a hydroxyl group (A-1) | 1,2-propanediol | SP value = 13.5, boiling point = 188°C | 17.5 | 17.5 | 17.5 | 17.5 | 17.5 | 17.5 | 17.5 | 17.5 | 17.5 |
| | | N-methyldiethanolamine | SP value = 12.3, boiling point = 247°C | | | | | | | | | |
| | | propylene glycol monomethyl ether | SP value = 11.3, boiling point = 121°C | 2.5 | 2.5 | 2.5 | 2.5 | 2.5 | 2.5 | 2.5 | 2.5 | 2.5 |
| | Organic solvent having SP value of at least 10 but less than 11 $(cal/cm^3)^{1/2}$ and having a hydroxyl group (A-2) | diethylene glycol mono-n-butyl ether | SP value = 10.5, boiling point = 231°C | | | | | | | | | |
| | | Propylene glycol mono-n-butyl ether | SP value = 10.4, boiling point = 170°C | 2.5 | 2.5 | 2.5 | 2.5 | 2.5 | 2.5 | 2.5 | 2.5 | 2.5 |
| Surfactants | Acetylenediol-based surfactant | SURFYNOL 104 | SP value = 10.4, HLB value = 3.0 | 1 | 1 | 1 | | 1 | 1 | 1 | 1 | 1 |
| | Polyoxyalkylene alkyl ether-based surfactant | NIKKOL BB-20 | SP value = 9.3, HLB value = 14.6 | | | | 1 | | | | | |
| | Siloxane-based surfactants | Siloxane-based surfactant 2 | SP value = 8.1 oxyethylene groups/Si atoms = 1.2 | 1.5 | 1.5 | 1.5 | | 1.5 | 1.5 | 1.5 | 1.5 | 1.5 |
| | | Siloxane-based surfactant 3 | SP value = 7.9 oxyethylene groups/Si atoms = 0.67 | | | | 2.5 | | | | | |
| Binder resins | Acrylic resins (each with solid fraction: 30%) | Acrylic resin 1 | SP value = 10.7, acid value = 26.1 aromatic ring structure content = 7.5% | | | | | | 3.3 | 8.3 | 40 | 50 |
| | | Acrylic resin 5 | SP value = 10.5, acid value = 26.1 aromatic ring structure content = 19.5% | | | 13.3 | | | | | | |
| | | Acrylic resin 9 | SP value = 12.7, acid value = 26.1 aromatic ring structure content = 6.6% | | 16.7 | | | 23.3 | | | | |
| | Urethane resins (each with solid fraction: 30%) | Urethane resin 13 | SP value = 9.4, acid value = 43.5 aromatic ring structure content = 0% | | | | 25 | | | | | |
| | | Urethane resin 14 | SP value = 11.0, acid value = 59.3 aromatic ring structure content = 24.7% | 50 | | 25 | | | | | | |
| Wax resin | Polyolefin resin | HITEC E-6400 (solid fraction: 35%) | SP value = 8.6 | | 5.7 | 2.9 | 7.1 | | | | | |
| Pigment dispersion (cyan, magenta) | | | | 20 | 20 | 20 | 20 | 20 | 20 | 20 | 20 | 20 |
| Other | Preservative | BITaq | | 1 | 1 | 1 | 1 | 1 | 1 | 1 | 1 | 1 |
| Specifications | Amount of organic solvent (A-1) [%] | | | 20.0 | 20.0 | 20.0 | 20.0 | 20.0 | 20.0 | 20.0 | 20.0 | 20.0 |
| | Weighted average value of SP values of resins and surfactants $[(cal/cm^3)^{1/2}]$ | | | 10.4 | 10.9 | 10.2 | 8.9 | 11.7 | 9.8 | 10.1 | 10.5 | 10.5 |
| | Amount of other organic solvent relative to total mass of organic solvent | | | 11% | 11% | 11% | 11% | 11% | 11% | 11% | 11% | 11% |
| | Amount of organic solvent (A-2) relative to total mass of other organic solvent | | | 100% | 100% | 100% | 100% | 100% | 100% | 100% | 100% | 100% |
| | Boiling point of organic solvent (weighted average value) [°C] | | | 179 | 179 | 179 | 179 | 179 | 179 | 179 | 179 | 179 |
| | Amount of other surfactant relative to total mass of surfactants | | | 60% | 60% | 60% | 71% | 60% | 60% | 60% | 60% | 60% |
| | Amount of binder resin (%) | | | 5.0 | 5.0 | 6.5 | 2.5 | 7.0 | 1.0 | 2.5 | 12.0 | 15.0 |

Among the raw materials listed in Table 4, details regarding those materials recorded using abbreviations or product names are listed below. The units for the SP values shown in Table 4 are $(cal/cm^3)^{1/2}$, and the units for the acid values are mgKOH/g.

<<Surfactants>>

SURFYNOL 104: 2,4,7,9-tetramethyl-5-decyne-4,7-diol manufactured by Evonik GmbH, SP value: 10.4 $(cal/cm^3)^{1/2}$, HLB value: 3.0

SURFYNOL 420: oxyethylene (1.3 mol) adduct of 2,4,7,9-tetramethyl-5-decyne-4,7-diol manufactured by Evonik GmbH, SP value: 10.3 $(cal/cm^3)^{1/2}$, HLB value: 4.0

SURFYNOL 440: oxyethylene (3.5 mol) adduct of 2,4,7,9-tetramethyl-5-decyne-4,7-diol manufactured by Evonik GmbH, SP value: 10.1 $(cal/cm^3)^{1/2}$, HLB value: 8.1

SURFYNOL 2502: oxyethylene (5 mol) and oxypropylene (2 mol) adduct of 2,4,7,9-tetramethyl-5-decyne-4,7-diol manufactured by Evonik GmbH, SP value: 9.7 $(cal/cm^3)^{1/2}$, HLB value: 7.8

DYNOL 607: oxyethylene (about 7 mol) adduct of 2,5,8,11-tetramethyl-6-dodecyne-5,8-diol manufactured by Evonik GmbH, SP value: 9.8 $(cal/cm^3)^{1/2}$, HLB value: 11.0

SURFYNOL 465: oxyethylene (10 mol) adduct of 2,4,7,9-tetramethyl-5-decyne-4,7-diol manufactured by Evonik GmbH, SP value: 9.8 $(cal/cm^3)^{1/2}$, HLB value: 13.2

EMALEX 705: a compound of the above general formula 3 in which $R^1$ represents a 1-lauryl group, $R^2$ represents an ethylene group, and n is 5, manufactured by Nihon Emulsion Co., Ltd., SP value: 9.6 $(cal/cm^3)^{1/2}$, HLB value: 10.8

EMALEX 710: a compound of the above general formula 3 in which $R^1$ represents a 1-lauryl group, $R^2$ represents an ethylene group, and n is 10, manufactured by Nihon Emulsion Co., Ltd., SP value: 9.5 $(cal/cm^3)^{1/2}$, HLB value: 14.1

EMALEX 720: a compound of the above general formula 3 in which $R^1$ represents a 1-lauryl group, $R^2$ represents an ethylene group, and n is 20, manufactured by Nihon Emulsion Co., Ltd., SP value: 9.5 $(cal/cm^3)^{1/2}$, HLB value: 16.5

EMALEX 730: a compound of the above general formula 3 in which $R^1$ represents a 1-lauryl group, $R^2$ represents an ethylene group, and n is 30, manufactured by Nihon Emulsion Co., Ltd., SP value: 9.5 $(cal/cm^3)^{1/2}$, HLB value: 17.5

EMALEX 750: a compound of the above general formula 3 in which $R^1$ represents a 1-lauryl group, $R^2$ represents an ethylene group, and n is 50, manufactured by Nihon Emulsion Co., Ltd., SP value: 9.4 $(cal/cm^3)^{1/2}$, HLB value: 18.4

NONION S-207: a compound of the above general formula 3 in which $R^1$ represents a 1-stearyl group, $R^2$ represents an ethylene group, and n is 7, manufactured by NOF Corporation, SP value: 9.4 $(cal/cm^3)^{1/2}$, HLB value: 10.7

NONION S-215: a compound of the above general formula 3 in which $R^1$ represents a 1-stearyl group, $R^2$ represents an ethylene group, and n is 15, manufactured by NOF Corporation, SP value: 9.4 $(cal/cm^3)^{1/2}$, HLB value: 14.2

NIKKOL BB-10: a compound of the above general formula 3 in which $R^1$ represents a 1-behenyl group, $R^2$ represents an ethylene group, and n is 10, manufactured by Nikko Chemicals Co., Ltd., SP value: 9.3 $(cal/cm^3)^{1/2}$, HLB value: 11.5

NIKKOL BB-20: a compound of the above general formula 3 in which $R^1$ represents a 1-behenyl group, $R^2$ represents an ethylene group, and n is 20, manufactured by Nikko Chemicals Co., Ltd., SP value: 9.3 $(cal/cm^3)^{1/2}$, HLB value: 14.6

Siloxane-based surfactant 1: a compound of the above general formula 4 in which p=0, q=1, $R^3$ is a structure represented by the above general formula 5 (wherein r=3, s=5, t=0, and $R^5$ represents -OH), and $R^4$ represents a methyl group, SP value: 8.9 $(cal/cm^3)^{1/2}$, ratio of number of oxyethylene groups relative to Si atoms = 1.7

Siloxane-based surfactant 2: a compound of the above general formula 4 in which p=1, q=2, $R^3$ is a structure represented by the above general formula 5 (wherein r=3, s=3, t=0, and $R^5$ represents $-OCH_3$), and $R^4$ represents a methyl group, SP value: 8.1 $(cal/cm^3)^{1/2}$, ratio of number of oxyethylene groups relative to Si atoms = 1.2

Siloxane-based surfactant 3: a compound of the above general formula 4 in which p=13, q=0, $R^4$ is a structure represented by the above general formula 5 (wherein r=3, s=5, t=0, and $R^5$ represents $-OCH_3$), SP value: 7.9 $(cal/cm^3)^{1/2}$, ratio of number of oxyethylene groups relative to Si atoms = 0.67

Siloxane-based surfactant 4: a compound of the above general formula 4 in which p=23, q=0, $R^4$ is a structure represented by the above general formula 5 (wherein r=3, s=6, t=1, and $R^5$ represents -OH), SP value: 8.1 $(cal/cm^3)^{1/2}$, ratio of number of oxyethylene groups relative to Si atoms = 0.48

<<Wax Resin»

HITEC E-6400: oxidized polyolefin resin microparticles (solid fraction concentration: 35% by mass) manufactured by Toho Chemical Industry Co., Ltd., SP value: 8.6 $(cal/cm^3)^{1/2}$

<<Other Component»

BITaq: a 1% aqueous solution of 1,2-benzisothiazolion-3-one

<Production of Pretreatment Liquids>

Using the blend formulations shown below in each of the columns in Table 5, the various raw materials were added to a mixing vessel fitted with a stirrer. Following addition of all of the raw materials, each of the resulting mixtures was stirred thoroughly at room temperature (25°C) until a uniform mixture was obtained. Subsequently, the mixtures were each filtered through a nylon mesh with a pore size of 100 μm to complete production of pretreatment liquids 1 to 3. In the production of these pretreatment liquids, for each column in Table 5, the components were added to the mixing vessel in sequence, starting from the material in the top row. However, in the case of components containing two or more raw materials, the order of addition of those raw materials within the component was arbitrary. Moreover, the addition of each raw material was conducted while the mixture inside the mixing vessel was under constant stirring.

[Table 5]

| | | | Pretreatment liquid 1 | Pretreatment liquid 2 | Pretreatment liquid 3 |
|---|---|---|---|---|---|
| Ion-exchanged water | | | 78.5 | 78.5 | 73.5 |
| Pretreatment liquid organic solvent | 1,2-propanediol | SP value = 13.5, boiling point = 188°C | | | 8 |
| | Isopropanol | SP value = 11.6 boiling point = 83°C | 5 | 5 | 2 |
| Coagulant | Calcium formate | | 3 | 3 | 3 |
| | Calcium lactate pentahydrate | | 3 | 3 | 3 |
| Pretreatment liquid binder resin | Acrylic resin 12 | SP value = 10.3 | 7.5 | 7.5 | 7.5 |
| Pretreatment liquid wax resin | HITEC E-6400 | SP value = 8.6 | 1 | 1 | 1 |
| Pretreatment liquid surfactant | SURFYNOL 440 | SP value = 10.1 | 1 | | 1 |
| | SURFYNOL 465 | SP value = 9.8 | | 1 | |
| Other component | BITaq | | 1 | 1 | 1 |
| Specifications | Cation equivalent concentration (meq/g) | | 0.66 | 0.66 | 0.66 |
| | Weighted average value of SP values of resins and surfactant [(cal/cm$^3$)$^{1/2}$] | | 10.6 | 10.6 | 10.9 |

<Printed Item Production 1>

An inkjet jetting apparatus was prepared with two inkjet heads KJ4B-1200 manufactured by Kyocera Corporation (design resolution: 1,200 dpi, nozzle diameter: 20 μm) installed along the transport direction of the printing substrate, and an aqueous inkjet ink set was used to fill these heads with a cyan ink and a magenta ink in that sequence from the upstream side of the transport direction. Further, a shrink film that had been cut in advance to A4 size (width 21 cm × length 30 cm) and then subjected to a corona treatment on the print surface was affixed to the conveyor. Subsequently, the conveyor was driven at a speed of 50 m/minute, and when the shrink film passed beneath the installation position of the inkjet heads, the aqueous inkjet ink set was jetted onto the shrink film using a drop volume of 2 pL per head, thereby printing an image. Immediately after printing, the printed shrink film was placed in a forced convection constant temperature oven set to 55°C and dried for two minutes to complete production of a printed item.

The following three types of shrink film were used for the abovementioned shrink film.

- PET shrink film: HISHIPET (thickness: 40 μm) manufactured by Mitsubishi Chemical Corporation
- PS shrink film: DXL (thickness: 45 μm) manufactured by Mitsubishi Chemical Corporation

- PP shrink film: KOHJIN POLYSET CX (thickness: 20 μm) manufactured by Kohjin Film & Chemicals Co., Ltd.

Furthermore, the printed items produced using the above method were of the two types described below. For each of the aqueous inkjet inks detailed in Table 4, printed items were produced by using the method described above to separately print the two types of images described below onto each of the three types of shrink film.

- Cyan solid printed item: a printed item (width 15 cm × length 30 cm) with a print ratio of 100% printed using only the aqueous cyan ink
- Two-color cross-shaped printed item: a rectangular shape of width 5 mm × length 5 cm printed using the aqueous cyan ink with the long side parallel to the transport direction of the printing substrate, and a rectangular shape of width 5 mm × length 5 cm printed using the aqueous magenta ink with the long side perpendicular to the transport direction of the printing substrate were printed with the center regions of the rectangular shapes intersecting in a cross-shape.

[Examples 1 to 85, Comparative Examples 1 to 8]

Using the printed items produced using the aqueous inkjet inks and aqueous inkjet ink sets described above, the evaluations described below were conducted. The results of these evaluations were as shown in Table 6.

<Evaluation 1: Evaluation of Deformation Followability >

The solid printed item produced using the method described above was cut, and rolled with the ink layer facing inward to form a cylindrical shape with a diameter of 9 cm and a height of 12 cm. This printed item was placed over a glass bottle (shrink target object) of diameter 75 mm that has been preheated in a 70°C constant temperature oven, and was then placed in a 100°C constant temperature oven for 15 seconds to shrink the printed item. Following the shrink process, the degree of wrinkling and cracking in the printed item was inspected visually to evaluated the deformation followability. The evaluation criteria used are listed below, and a result of 2 points or higher was considered a practically usable level. Each of the above three types of shrink film were evaluated.

5: wrinkling and cracking was better than that in Example 13
4: wrinkling and cracking was similar to that in Example 13
3: wrinkling and cracking was better than that in Example 19, but worse than that in Example 13
2: wrinkling and cracking was similar to that in Example 19
1: wrinkling and cracking was worse than that in Example 19

<Evaluation 2: Evaluation of Bleeding>

The two-color cross-shaped printed item produced using the PET shrink film was inspected visually and under a magnifying lens, and the level of bleeding was evaluated by ascertaining the degree of bleeding within the intersection portion. The evaluation criteria used are listed below, and a result of 2 points or higher was considered a practically usable level.

5: bleeding was better than that in Example 13
4: bleeding was similar to that in Example 13
3: bleeding was better than that in Example 19, but worse than that in Example 13 2: bleeding was similar to that in Example 19
1: bleeding was worse than that in Example 19

<Evaluation 3: Evaluation of Jetting Stability>

Each of the aqueous cyan inks produced above was used to fill an inkjet jetting apparatus fitted with an inkjet head KJ4B-1200 manufactured by Kyocera Corporation (design resolution: 1,200 dpi, nozzle diameter: 20 μm). A nozzle check pattern was printed, and following confirmation of no nozzle misfires (a phenomenon where the aqueous inkjet ink is not jetted from a nozzle), the inkjet jetting apparatus was placed in standby mode in an environment at 25°C. After a prescribed period of time had elapsed, a second nozzle check pattern was printed, and the number of nozzle misfires was counted by visual inspection to evaluate the jetting stability. The evaluation criteria used are listed below, and a result of 2 points or higher was considered a practically usable level.

4: no nozzle misfires even when printing was conducted after 3 hours standby

3: no nozzle misfires when printing was conducted after 2 hours standby, but one or more nozzle misfires occurred when printing was conducted after 3 hours standby
2: no nozzle misfires when printing was conducted after 1 hour standby, but one or more nozzle misfires occurred when printing was conducted after 2 hours standby
1: one or more nozzle misfires occurred when printing was conducted after 1 hour standby

[Table 6]

| | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|---|
| Aqueous inkjet ink No. | | | 1 | 2 | 3 | 4 | 5 | 6 | 7 | 8 | 9 | 10 | 11 | 12 | 13 | 14 | 15 |
| Evaluation 1 | Deformation followability | PET shrink film | 4 | 4 | 4 | 4 | 4 | 3 | 2 | 2 | 2 | 4 | 4 | 4 | 4 | 4 | 4 |
| | | PS shrink film | 2 | 2 | 3 | 3 | 3 | 3 | 4 | 4 | 4 | 3 | 3 | 4 | 4 | 4 | 4 |
| | | PP shrink film | 2 | 2 | 2 | 2 | 2 | 2 | 2 | 2 | 2 | 2 | 2 | 4 | 4 | 4 | 4 |
| Evaluation 2 | Bleeding | | 3 | 3 | 4 | 4 | 3 | 3 | 2 | 3 | 4 | 3 | 3 | 3 | 4 | 3 | 3 |
| Evaluation 3 | Jetting stability | | 4 | 4 | 4 | 4 | 4 | 4 | 4 | 4 | 4 | 4 | 4 | 4 | 4 | 4 | 4 |

| | | | Example 16 | Example 17 | Example 18 | Comparative Example 1 | Comparative Example 2 | Comparative Example 3 | Example 19 | Example 20 | Example 21 | Example 22 | Comparative Example 4 | Example 23 | Example 24 | Example 25 | Example 26 | Example 27 |
|---|---|---|---|---|---|---|---|---|---|---|---|---|---|---|---|---|---|---|
| Aqueous inkjet ink No. | | | 16 | 17 | 18 | 19 | 20 | 21 | 22 | 23 | 24 | 25 | 26 | 27 | 28 | 29 | 30 | 31 |
| Evaluation 1 | Deformation followability | PET shrink film | 4 | 4 | 4 | 1 | 1 | 1 | 2 | 4 | 4 | 3 | 2 | 4 | 4 | 4 | 4 | 4 |
| | | PS shrink film | 3 | 3 | 4 | 1 | 1 | 2 | 2 | 3 | 3 | 3 | 2 | 3 | 4 | 4 | 4 | 4 |
| | | PP shrink film | 4 | 2 | 4 | 2 | 2 | 2 | 2 | 2 | 2 | 2 | 1 | 2 | 2 | 2 | 3 | 4 |
| Evaluation 2 | Bleeding | | 3 | 3 | 3 | 2 | 2 | 2 | 2 | 4 | 4 | 3 | 1 | 4 | 4 | 4 | 4 | 4 |
| Evaluation 3 | Jetting stability | | 4 | 4 | 4 | 2 | 1 | 2 | 2 | 4 | 4 | 3 | 2 | 4 | 4 | 4 | 4 | 4 |

| | | Example 28 | Example 29 | Example 30 | Example 31 | Example 32 | Example 33 | Example 34 | Example 35 | Example 36 | Comparative Example 5 | Example 37 | Example 38 | Example 39 | Example 40 | Example 41 |
|---|---|---|---|---|---|---|---|---|---|---|---|---|---|---|---|---|
| Aqueous inkjet ink No. | | 32 | 33 | 34 | 35 | 36 | 37 | 38 | 39 | 40 | 41 | 42 | 43 | 44 | 45 | 46 |
| Evaluation 1 Deformation followability | PET shrink film | 3 | 4 | 4 | 4 | 4 | 3 | 4 | 4 | 3 | 1 | 4 | 4 | 4 | 4 | 3 |
| | PS shrink film | 2 | 3 | 3 | 3 | 3 | 2 | 3 | 3 | 3 | 1 | 4 | 4 | 4 | 3 | 3 |
| | PP shrink film | 2 | 2 | 2 | 2 | 2 | 2 | 2 | 2 | 2 | 1 | 4 | 4 | 4 | 4 | 2 |
| Evaluation 2 | Bleeding | 4 | 4 | 4 | 4 | 3 | 2 | 4 | 4 | 4 | 3 | 3 | 3 | 3 | 3 | 2 |
| Evaluation 3 | Jetting stability | 2 | 3 | 4 | 4 | 4 | 4 | 4 | 4 | 4 | 2 | 4 | 4 | 4 | 4 | 4 |

[Table 6 continued 1]

| | | | Example 42 | Example 43 | Example 44 | Example 45 | Example 46 | Example 47 | Example 48 | Example 49 | Example 50 | Example 51 | Example 52 | Example 53 | Example 54 | Example 55 | Example 56 | Example 57 | Example 58 |
|---|---|---|---|---|---|---|---|---|---|---|---|---|---|---|---|---|---|---|---|
| Aqueous inkjet ink No. | | | 47 | 48 | 49 | 50 | 51 | 52 | 53 | 54 | 55 | 56 | 57 | 58 | 59 | 60 | 61 | 62 | 63 |
| Evaluation 1 | Deformation followability | PET shrink film | 4 | 3 | 3 | 3 | 3 | 4 | 3 | 4 | 3 | 5 | 5 | 5 | 5 | 3 | 4 | 4 | 4 |
| | | PS shrink film | 4 | 3 | 3 | 3 | 3 | 4 | 3 | 4 | 3 | 5 | 5 | 4 | 5 | 3 | 4 | 4 | 4 |
| | | PP shrink film | 4 | 2 | 2 | 2 | 2 | 4 | 2 | 4 | 2 | 5 | 5 | 5 | 5 | 2 | 4 | 4 | 3 |
| Evaluation 2 | Bleeding | | 3 | 2 | 2 | 2 | 2 | 3 | 2 | 3 | 2 | 4 | 4 | 4 | 4 | 2 | 3 | 3 | 3 |
| Evaluation 3 | Jetting stability | | 4 | 4 | 4 | 4 | 4 | 4 | 4 | 4 | 4 | 4 | 4 | 4 | 4 | 2 | 4 | 4 | 3 |

| | | | Example 59 | Example 60 | Example 61 | Example 62 | Example 63 | Example 64 | Example 65 | Example 66 | Example 67 | Example 68 | Example 69 | Example 70 | Example 71 | Example 72 | Example 73 |
|---|---|---|---|---|---|---|---|---|---|---|---|---|---|---|---|---|---|
| Aqueous inkjet ink No. | | | 64 | 65 | 66 | 67 | 68 | 69 | 70 | 71 | 72 | 73 | 74 | 75 | 76 | 77 | 78 |
| Evaluation 1 | Deformation followability | PET shrink film | 3 | 4 | 4 | 3 | 4 | 4 | 4 | 3 | 4 | 3 | 4 | 4 | 4 | 3 | 4 |
| | | PS shrink film | 3 | 3 | 4 | 3 | 3 | 4 | 3 | 3 | 4 | 3 | 4 | 4 | 4 | 3 | 4 |
| | | PP shrink film | 2 | 3 | 4 | 3 | 3 | 4 | 3 | 2 | 3 | 2 | 4 | 4 | 4 | 3 | 4 |
| Evaluation 2 | Bleeding | | 2 | 3 | 3 | 2 | 2 | 3 | 3 | 2 | 3 | 2 | 4 | 4 | 4 | 4 | 4 |
| Evaluation 3 | Jetting stability | | 4 | 4 | 4 | 2 | 3 | 4 | 3 | 2 | 4 | 4 | 4 | 4 | 4 | 4 | 4 |

| | | Example 74 | Example 75 | Example 76 | Example 77 | Example 78 | Example 79 | Example 80 | Example 81 | Comparative Example 6 | Comparative Example 7 | Example 82 | Example 83 | Example 84 | Example 85 | Comparative Example 8 |
|---|---|---|---|---|---|---|---|---|---|---|---|---|---|---|---|---|
| Aqueous inkjet ink No. | | 79 | 80 | 81 | 82 | 83 | 84 | 85 | 86 | 87 | 88 | 89 | 90 | 91 | 92 | 93 |
| Evaluation 1: Deformation followability | PET shrink film | 4 | 4 | 4 | 3 | 2 | 3 | 4 | 4 | 1 | 3 | 3 | 4 | 4 | 2 | 1 |
| | PS shrink film | 3 | 4 | 4 | 3 | 2 | 3 | 3 | 4 | 1 | 1 | 4 | 4 | 4 | 2 | 1 |
| | PP shrink film | 2 | 4 | 4 | 3 | 3 | 2 | 4 | 4 | 2 | 1 | 2 | 4 | 4 | 2 | 1 |
| Evaluation 2 | Bleeding | 4 | 4 | 4 | 4 | 3 | 2 | 4 | 4 | 2 | 4 | 3 | 4 | 4 | 4 | 2 |
| Evaluation 3 | Jetting stability | 4 | 4 | 4 | 4 | 4 | 2 | 3 | 4 | 3 | 3 | 4 | 4 | 4 | 2 | 3 |

As is evident from Table 4 and Table 6, the aqueous inkjet inks 1 to 18, 22 to 25, 27 to 40, 42 to 86, and 89 to 92 which satisfy the requirements of the present invention were confirmed as meeting practically usable levels in all of the evaluations for deformation followability relative to a variety of shrink films, bleeding, and jetting stability.

In contrast, the aqueous inkjet inks 19 and 20 which did not contain the organic solvent (A-1) exhibited poor deformation followability relative to the PET shrink film and the PS shrink film. It is thought that the lack of the organic solvent (A-1) means the compatibility between the aqueous inkjet ink and the resin that constitutes the shrink film is not entirely satisfactory, resulting in the ink layer being unable to follow the deformation of the shrink film. A similar tendency was observed in the aqueous inkjet ink 21 in which the amount of the organic solvent (A-1) was less than 5% by mass. On the other hand, in the aqueous inkjet ink 26 in which the amount of the organic solvent (A-1) exceeded 30% by mass, a deterioration in the deformation followability relative to the PP shrink film was confirmed, and significant bleeding was confirmed in the printed item. It is thought that the bleeding deteriorated due to a disruption in the balance of the surface tension for the aqueous inkjet ink.

The aqueous inkjet ink 41 was a system that did not contain the surfactant (B-1), and regardless of the type of resin constituting the shrink substrate, the deformation followability did not reach a practically usable level. Further, in the case of the aqueous inkjet ink 87 for which the weighted average of the SP values of the resin and the surfactant was less than 9 $(cal/cm^3)^{1/2}$ and the aqueous inkjet ink 88 for which the weighted average of the SP values of the resin and the surfactant exceeded 11.5 $(cal/cm^3)^{1/2}$, a deterioration in the deformation followability was observed for some of the shrink films.

The above results confirmed that in order to obtain printed items with excellent deformation followability regardless of the type of printing substrate constituting the shrink film, a composition that satisfied the composition of the aqueous inkjet ink of an embodiment of the present invention was essential.

The aqueous inkjet ink 93 reproduced the composition of an aqueous ink specifically described in Patent Document 1 (only the composition of the organic solvent and the surfactant), but the evaluation results revealed a deterioration in the deformation followability regardless of the resin constituting the shrink film substrate. In a similar manner to the aqueous inkjet ink 41, the aqueous inkjet ink 93 did not contain the surfactant (B-1), but rather used only a siloxane-based surfactant. It is thought that this resulted in a lack of uniformity of the thickness of the ink layer and a deterioration in the compatibility with the shrink film, which had adverse effects on the deformation followability.

[Examples 86 to 136]

Further, using each of the above aqueous inkjet inks 13, 15, 42 to 86, and 89 to 92, an evaluation 4 described below was conducted using the cyan solid printed item produced using the method described above. The evaluation results were as shown in Table 7.

<Evaluation 4: Evaluation of Recyclability>

Using the PET shrink film as the printing substrate, the cyan solid printed item produced using the method described above was cut into a 4 cm × 4 cm square in the region that had been printed with the aqueous cyan ink. The cut section of the printed item was then immersed in 50 g of a 2% by mass aqueous solution of sodium hydroxide, and after heating to 70°C, the mixture was stirred for 60 minutes. Subsequently, the printed item was removed from the sodium hydroxide aqueous solution, and following washing with water and drying, the degree of separation of the ink layer from the shrink film was ascertained visually to evaluate the recyclability. The evaluation criteria used are listed below, and a result of 2 points or higher was considered a practically usable level.

4: detachment of the ink layer from the shrink film was observed, and the degree of that detachment was greater than that observed for Example 86

3: detachment of the ink layer from the shrink film was observed, and the degree of that detachment was similar to that observed for Example 86

2: detachment of the ink layer from the shrink film was observed, but the degree of that detachment was less than that observed for Example 86

1: detachment of the ink layer from the shrink film was not observed

[Table 7]

| | | Example 86 | Example 87 | Example 88 | Example 89 | Example 90 | Example 91 | Example 92 | Example 93 | Example 94 | Example 95 | Example 96 | Example 97 | Example 98 | Example 99 | Example 100 | Example 101 |
|---|---|---|---|---|---|---|---|---|---|---|---|---|---|---|---|---|---|
| Aqueous inkjet ink No. | | 13 | 15 | 42 | 43 | 44 | 45 | 46 | 47 | 48 | 49 | 50 | 51 | 52 | 53 | 54 | 55 |
| Evaluation 4 | Recyclability | 3 | 3 | 3 | 4 | 4 | 4 | 3 | 3 | 3 | 3 | 3 | 3 | 3 | 3 | 3 | 3 |

| | | Example 102 | Example 103 | Example 104 | Example 105 | Example 106 | Example 107 | Example 108 | Example 109 | Example 110 | Example 111 | Example 112 | Example 113 | Example 114 | Example 115 | Example 116 | Example 117 |
|---|---|---|---|---|---|---|---|---|---|---|---|---|---|---|---|---|---|
| Aqueous inkjet ink No. | | 56 | 57 | 58 | 59 | 60 | 61 | 62 | 63 | 64 | 65 | 66 | 67 | 68 | 69 | 70 | 71 |
| Evaluation 4 | Recyclability | 4 | 4 | 4 | 4 | 3 | 3 | 3 | 3 | 2 | 3 | 3 | 3 | 2 | 3 | 3 | 2 |

| | | Example 118 | Example 119 | Example 120 | Example 121 | Example 122 | Example 123 | Example 124 | Example 125 | Example 126 | Example 127 | Example 128 | Example 129 | Example 130 | Example 131 | Example 132 |
|---|---|---|---|---|---|---|---|---|---|---|---|---|---|---|---|---|
| Aqueous inkjet ink No. | | 72 | 73 | 74 | 75 | 76 | 77 | 78 | 79 | 80 | 81 | 82 | 83 | 84 | 85 | 86 |
| Evaluation 4 | Recyclability | 3 | 3 | 3 | 3 | 3 | 3 | 3 | 3 | 3 | 3 | 3 | 3 | 3 | 3 | 3 |

| | | Example 133 | Example 134 | Example 135 | Example 136 |
|---|---|---|---|---|---|
| Aqueous inkjet ink No. | | 89 | 90 | 91 | 92 |
| Evaluation 4 | Recyclability | 3 | 3 | 3 | 2 |

<Printed Item Production 2>

Using a non-wire bar coater "250-OSP-04" manufactured by OSG System Products Co., Ltd., each of the above pretreatment liquids 1 to 3 was applied to each of the three types of shrink films described above in an amount sufficient to form a wet film thickness of 4 μm. Subsequently, the coated shrink film was placed in an air oven at 55°C and dried for one minute, yielding a shrink film with an applied pretreatment liquid layer.

With the exception of using these shrink films with an applied pretreatment liquid layer as the printing substrate, the same methods and conditions as those described above in the section entitled "Printed Item Production 1" were used to produce a cyan solid printed item and a two-color cross-shaped printed item.

[Examples 137 to 142]

Pretreatment liquids and aqueous inkjet inks were combined as shown below in Table 8, and for each combination a cyan solid printed item and a two-color cross-shaped printed item were produced using the methods described above. The produced items were then subjected to the evaluation 1 and evaluation 2 described above. The evaluation results were as shown in Table 8.

[Table 8]

| | | | Example 137 | Example 138 | Example 139 | Example 140 | Example 141 | Example 142 |
|---|---|---|---|---|---|---|---|---|
| Combination | Pretreatment liquid | | 1 | 2 | 3 | 1 | 2 | 3 |
| | Aqueous inkjet ink | | 15 | 15 | 15 | 22 | 22 | 22 |
| Evaluation 1 | Deformation followability | PET shrink film | 3 | 3 | 4 | 2 | 2 | 4 |
| | | PS shrink film | 4 | 3 | 4 | 3 | 2 | 3 |
| | | PP shrink film | 3 | 3 | 3 | 2 | 2 | 2 |
| Evaluation 2 | Bleeding | | 5 | 5 | 5 | 5 | 5 | 5 |

The results in Table 5 and Table 8 confirmed that even in the case of a pretreatment liquid, by ensuring the conditions of the present invention were satisfied, printed items having excellent deformation followability could be obtained. Further, by combining a pretreatment liquid capable of forming an ink coagulation layer with an aqueous inkjet ink, extremely superior results of 5 points were obtained for the bleeding evaluation.

## Claims

**1.** An aqueous inkjet ink for shrink film, the inkjet ink comprising an organic solvent, a surfactant, and a resin, wherein

the organic solvent includes an organic solvent (A-1) having an SP value within a range from 11 to 13.5 $(cal/cm^3)^{1/2}$ and having at least one hydroxyl group in an amount within a range from 5 to 30% by mass of a total mass of the aqueous inkjet ink,
the surfactant includes a surfactant (B-1) composed of at least one surfactant selected from the group consisting of acetylenediol-based surfactants and polyoxyalkylene alkyl ether-based surfactants, and
a weighted average value of SP values of the resin and the surfactant is within a range from 9 to 11.5 $(cal/cm^3)^{1/2}$.

**2.** The aqueous inkjet ink for shrink film according to Claim 1, wherein the surfactant (B-1) composed of at least one surfactant selected from the group consisting of acetylenediol-based surfactants and polyoxyalkylene alkyl ether-based surfactants includes a surfactant (B-1-1) having an HLB value within a range from 3 to 12.

**3.** The aqueous inkjet ink for shrink film according to Claim 1 or 2, wherein the organic solvent has a boiling point (weighted average value) at one atmosphere within a range from 150 to 190°C.

**4.** A printed item obtained by printing the aqueous inkjet ink according to Claim 1 or 2 onto a shrink film using an inkjet printing method.

**5.** Use of the aqueous inkjet ink according to any one of Claims 1 to 3 for a shrink film.

European Patent Office

# EUROPEAN SEARCH REPORT

Application Number
EP 24 20 9488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/047706 A1 (TOYO INK SC HOLDINGS CO LTD [JP]; TOYOCOLOR CO LTD [JP]) 30 March 2023 (2023-03-30) | 1-4 | INV. C09D11/102 C09D11/107 C09D11/108 C09D11/322 C09D11/38 |
| A | * examples; table 4 * | 5 | |
| X | US 2023/158809 A1 (YOSHIDA MASANORI [JP] ET AL) 25 May 2023 (2023-05-25) | 1-4 | |
| A | * examples * | 5 | |
| X | EP 3 904 474 A1 (KAO CORP [JP]) 3 November 2021 (2021-11-03) | 1-4 | |
| A | * examples * | 5 | |
| X | US 8 992 675 B2 (SEIKO EPSON CORP [JP]) 31 March 2015 (2015-03-31) | 1-4 | |
| A | * examples * | 5 | |
| X | WO 2022/224787 A1 (NIPPON KAYAKU KK [JP]) 27 October 2022 (2022-10-27) | 1-4 | |
| A | * examples * | 5 | TECHNICAL FIELDS SEARCHED (IPC) |
| X | US 2012/052261 A1 (AOYAMA TETSUYA [JP] ET AL) 1 March 2012 (2012-03-01) | 1-4 | C09D |
| A | * examples; table 1 * | 5 | |

The present search report has been drawn up for all claims

1

| Place of search | Date of completion of the search | Examiner |
|---|---|---|
| Munich | 14 March 2025 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 20 9488

This annex lists the patent family members relating to the patent documents cited in the above-mentioned European search report. The members are as contained in the European Patent Office EDP file on
The European Patent Office is in no way liable for these particulars which are merely given for the purpose of information.

14-03-2025

| Patent document cited in search report | Publication date | Patent family member(s) | Publication date |
|---|---|---|---|
| WO 2023047706 A1 | 30-03-2023 | EP 4410563 A1 | 07-08-2024 |
| | | JP 7074921 B1 | 24-05-2022 |
| | | JP 2023047409 A | 06-04-2023 |
| | | WO 2023047706 A1 | 30-03-2023 |
| US 2023158809 A1 | 25-05-2023 | JP 2023029244 A | 03-03-2023 |
| | | US 2023158809 A1 | 25-05-2023 |
| EP 3904474 A1 | 03-11-2021 | CN 113227272 A | 06-08-2021 |
| | | EP 3904474 A1 | 03-11-2021 |
| | | JP 7249776 B2 | 31-03-2023 |
| | | JP 2020105296 A | 09-07-2020 |
| | | WO 2020137457 A1 | 02-07-2020 |
| US 8992675 B2 | 31-03-2015 | JP 2014019842 A | 03-02-2014 |
| | | US 2014022321 A1 | 23-01-2014 |
| WO 2022224787 A1 | 27-10-2022 | CN 117120556 A | 24-11-2023 |
| | | EP 4328032 A1 | 28-02-2024 |
| | | JP 7266762 B2 | 28-04-2023 |
| | | JP WO2022224787 A1 | 27-10-2022 |
| | | US 2024182733 A1 | 06-06-2024 |
| | | WO 2022224787 A1 | 27-10-2022 |
| US 2012052261 A1 | 01-03-2012 | JP 5664027 B2 | 04-02-2015 |
| | | JP 2012051124 A | 15-03-2012 |
| | | US 2012052261 A1 | 01-03-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019189867 A
- JP 2003246136 A
- JP 2001215690 A
- JP 2002356451 A


### Non-patent literature cited in the description


- **R.F. FEDORS**. *Polymer Engineering & Science*, 1974, vol. 14 (2), 147-154